# EUROPÄISCHE PATENTSCHRIFT

(11) **EP 3 043 684 B1**
(45) Veröffentlichungstag und Bekanntmachung des Hinweises auf die Patenterteilung: **28.06.2017**
(21) Anmeldenummer: 14806312.6
(22) Anmeldetag: 04.12.2014
(51) Int. Cl.: A47G 29/14, A47G 29/16, E05B 47/00, E05B 65/00, E05C 9/08, G07C 9/00, H04L 9/32, H04W 4/00

(54) **GEHÄUSE MIT VERRIEGELUNGSEINHEIT UND VERFAHREN ZUM ENTRIEGELN VON EIN ODER MEHREREN TÜREN DES GEHÄUSES**
HOUSING WITH LOCKING UNIT, AND METHOD FOR UNLOCKING ONE OR MORE DOORS OF THE HOUSING
BOÎTIER COMPRENANT UNE UNITÉ DE DÉVERROUILLAGE ET PROCÉDÉ DE DÉVERROUILLAGE D'UNE OU DE PLUSIEURS PORTES DU BOÎTIER

(30) Priorität: 05.12.2013 DE 102013113554; 11.04.2014 DE 102014105246
(43) Veröffentlichungstag der Anmeldung: 20.07.2016
(73) Patentinhaber: Deutsche Post AG, 53113 Bonn (DE)
(72) Erfinder: HILD, Horst, 63533 Mainhausen (DE); CARSTENS, Christian, 53578 Windhagen (DE); DAUTZ, Christoph, 53225 Bonn (DE); BENZ, Ramin, 53229 Bonn (DE); JANSEN, Jochen, 53113 Bonn (DE)
(74) Vertreter: Cohausz & Florack
(86) Internationale Anmeldenummer: PCT/EP2014/076561
(87) Internationale Veröffentlichungsnummer: WO 2015/082608

(56) Entgegenhaltungen:
- WO-A2-01/95772
- FR-A1- 2 770 117
- FR-A1- 2 836 805

## Beschreibung

Die Erfindung betrifft ein Gehäuse, insbesondere einen Aufnahmebehälter von Gegenständen, mit mindestens zwei Türen zum Verriegeln von jeweiligen Gehäuseöffnungen, insbesondere zu Aufnahmefächern. Bei dem Gehäuse mit den Aufnahmefächern kann es sich gemäß einer besonders bevorzugten Ausführungsform um einen Paketkasten oder einen Paketbriefkasten zur Aufnahme von zuzustellenden Briefen und Paketen handeln, bei dem die erste Gehäuseöffnung in ein erstes Aufnahmefach für Pakete und die zweite Gehäuseöffnung in ein zweites Aufnahmefach für Briefe mündet. Diese beiden Aufnahmefächer sind jeweils mittels einer Tür verriegelbar, wobei die Tür des zweiten Aufnahmefachs einen Schlitz zum Einwurf von Briefen ohne Öffnen der Tür des Aufnahmefachs aufweist. Um ein Paket in das erste Aufnahmefach einzustellen, muss die Tür dieses ersten Aufnahmefachs dagegen geöffnet werden. Die Erfindung betrifft des Weiteren ein Verfahren zum Entriegeln von ein oder mehreren Türen eines erfindungsgemäßen Gehäuses.

Infolge der steigenden Nutzung des E-Commerce und des Online-Versandhandels erhöht sich die Anzahl von Paketsendungen signifikant. Eine bedeutende Zielgruppe dieses Internet-Handels stellen Berufstätige dar, die vor allem die Bequemlichkeit und die Unabhängigkeit von Ladungsöffnungszeiten zu schätzen wissen. Diese Vorzüge entfalten allerdings nur dann ihre volle Wirksamkeit, wenn die online bestellte Ware auch bequem zugestellt werden kann. Bei der Heimlieferung ergeben sich gerade für die Zielgruppe der Berufstätigen jedoch Probleme, weil die Besteller zur Zeit der Zustellung häufig nicht zuhause sind.

Vor diesem Hintergrund ist es wünschenswert, neben der normalen Briefzustellung in Briefkästen mit schlitzförmigen Öffnungen zum Einschieben der Briefe auch eine von der Anwesenheit des Empfängers unabhängige Möglichkeit zu schaffen, größere Sendungen, wie Päckchen oder Pakete, zustellen zu können.

Hierzu sind bereits große Packstationen mit einer Vielzahl von Aufnahmefächern bekannt, in die ein Postzusteller die Pakete einstellen kann. Nutzer der Packstationen können dann nach entsprechender Benachrichtigung durch den Zusteller und Authentifizierung an der Packstation das entsprechende Aufnahmefach öffnen und das Paket entnehmen. Ein entsprechendes System ist bspw. in der DE 20 2011101134 U1 beschrieben. Nachteilig bei diesen Packstationen ist jedoch der Aufwand für deren Verwaltung und das Abholen der Pakete für den Nutzer, der extra zu einer Packstation gehen oder fahren muss, um die ihm zugestellten Pakete tatsächlich in Empfang zu nehmen.

Insbesondere aus Komfortgründen für den Nutzer ist es wünschenswert, Zustellmöglichkeiten auch wesentlich dezentraler zu schaffen, bspw. jeweils separat für einen speziellen Empfänger. In diesem Zusammenhang ist es aus der DE 20 2012 012 010 U1 bekannt, Vorrichtungen zur Aufnahme von Sendungen aller Art vorzusehen, die aus einer Kombination von mindestens einem Briefkasten mit einem außenseitig zugänglichen Einführschlitz, mindestens einer verschließbaren Briefkastentür zur Entnahme der Briefe und mindestens einem Paketfach mit einer verschließbaren Paketfachtür aufgebaut sind. Hier sind die Tür des Paketfachs und die Tür des Brieffachs allerdings mit gesonderten Schlössern versehen, was den Nachteil bedingt, dass zumindest der Besitzer der Vorrichtung zwei verschiedene Schlüsselsysteme für den Zugang zum Paket- und Brieffach vorhalten muss.

Die FR 2 836 805 A1 offenbart eine Anlage mit einer Vielzahl von Fächern und den Fächern zugeordneten Klappen, die durch ein gemeinsames Antriebselement entriegelt werden können.

Die WO 01/95772 A2 offenbart eine Briefkastenanlage mit einer Vielzahl von Briefeinwurfklappen, die durch ein zentrales Betätigungselement entweder geöffnet oder geschlossen werden können.

Aufgabe der vorliegenden Erfindung ist es daher u.a., ein Gehäuse, insbesondere einen Paketbriefkasten, und ein Verfahren zum Entriegeln von ein oder mehreren Türen des Gehäuses zu schaffen, wobei eine sichere Verwahrung angelieferter und abzuholender Pakete ermöglicht wird, ohne dass zwangläufig auch das Brieffach geöffnet werden muss, wenn der Zusteller Pakete im Paketfach deponiert oder aus diesem abholt. Vorzugsweise sollte das System modular gestaltet sein, um eine kompatible und günstige Zusammenstellung des Gehäuses, insbesondere des Paketbriefkastens, gemäß individuellen Kundenwünschen ermöglichen zu können.

Diese Aufgabe wird mit den Merkmalen der Ansprüche 1 und 8 gelöst.

Dazu ist gemäß einer Ausführungsform des erfindungsgemäßen Gehäuses eine Verriegelungseinheit (nachfolgend als erfindungsgemäße Verriegelungseinheit bezeichnet) vorgesehen, die in an sich bekannter Weise für jede Tür jeweils ein Verriegelungselementmodul mit mindestens einem Verriegelungskörper insbesondere in Form eines Schließhakens und einen Verriegelungsantrieb zum Betätigen des/der Verriegelungskörper(s) aufweist. Eine Tür ist dabei beispielsweise jeweils einer Gehäuseöffnung, beispielsweise zu jeweils einem Aufnahmefach, zugeordnet, und kann beispielsweise in eine Stellung gebracht werden, in der sie die jeweilige Gehäuseöffnung verschließt.

Um eine einfache Handhabung zu erreichen wird erfindungsgemäß vorgeschlagen, dass der Verriegelungsantrieb für die insbesondere beiden Verriegelungselementmodule (oder auch für jedes Verriegelungselementmodul des Gehäuses) ein gemeinsames Antriebselement aufweist, welches um einen Verstellweg bewegbar ist, sowie in einer ersten Verstellposition den/die Verriegelungskörper für lediglich eine der Türen oder lediglich eine erste Gruppe von Türen der Türen in eine Entriegelungsstellung bringt und in einer zweiten Verstellposition die Verriegelungskörper für alle der Türen in eine Entriegelungsstellung bringt.

Bei mehr als zwei Türen sind also beispielsweise eine erste Gruppe von Türen der Türen und eine zweite Gruppe von Türen der Türen vorgesehen, wobei die erste Gruppe von Türen zusammen, aber separat von der zweiten Gruppe von Türen entriegelbar ist, und wobei die zweite Gruppe von Türen nur gemeinsam mit der ersten Gruppe von Türen entriegelbar ist. Mit anderen Worten können also entweder die erste Gruppe von Türen oder alle Türen der ersten und der zweiten Gruppe von Türen, entriegelt werden, was in dem Fall, dass das Gehäuse nur die erste Gruppe von Türen und die zweite Gruppe von Türen als Türen aufweist, bedeutet, dass alle Türen des Gehäuses entriegelt werden.

Es ist allerdings ebenfalls denkbar, dass ein oder mehrere Türen des Gehäuses nicht der erfindungsgemäßen Verriegelungseinheit zugeordnet sind. Dann weisen beispielsweise nur die Verriegelungsantriebe der Verriegelungselementmodule von zwei Türen des Gehäuses ein gemeinsames Antriebselement auf, so dass entweder eine der zwei Türen (erste Verstellposition) oder beide Türen gemeinsam (zweite Verstellposition) in eine Entriegelungsstellung gebracht werden können, während ein oder mehrere weitere Türen des Gehäuses (beispielsweise mit jeweiligen Verriegelungselementmodulen oder auch ohne diese) unabhängig von dem Antriebselement, beispielsweise durch ein separates mechanisches oder elektronisches Schloss, ver- und/oder entriegelt werden können.

Gemäß einer bevorzugten Ausführungsform sind in dem Gehäuse genau zwei Türen und respektive in der Verriegelungseinheit genau zwei Verriegelungselementmodule vorgesehen. In dieser Ausführungsform kann also die erste Tür zu dem ersten Aufnahmefach bzw. allgemeiner der ersten Gehäuseöffnung separat geöffnet werden. Wenn auch die zweite Tür geöffnet werden soll, ist es notwendig, beide Türen gleichzeitig zu öffnen.

Die erste Tür eignet sich also für eine Gehäuseöffnung, die ein Aufnahmefach für Pakete verschließt. In dieses Fach kann ein Zusteller ein Paket einstellen bzw. ein dort deponiertes Paket abholen, indem das gemeinsame Antriebselement in eine erste Verstellposition gebracht wird, in welcher nur die erste Tür zu dem Paketfach öffnet. Für den Nutzer des Paketbriefkastens (z.B. dessen Besitzer), der die zugestellten Briefe und Pakete abholen möchte, wird das gemeinsame Antriebselement vorzugsweise durch Weiterbewegen in die zweite Verstellposition gebracht, in welcher sowohl die erste Tür als auch die zweite Tür öffnen, so dass der Nutzer sowohl Briefe als auch Pakete aus dem Paketbriefkasten entnehmen kann. Der Paketzusteller erhält dagegen keinen Zugang zu dem Brieffach.

Im Zuge dieser bevorzugten Ausführungsform wird ggf. nur von der ersten bzw. zweiten Tür gesprochen. Entsprechend beziehen sich erste bzw. zweite Bestandteile der Verriegelungseinheit jeweils auf die erste bzw. die zweite Tür. Diese ersten und zweiten Bestandteile können sich aber, sofern mehr als zwei Türen vorhanden sind, auch auf die Gruppe mehrerer erster und zweiter Türen bzw. Verriegelungselementmodule beziehen.

Gemäß einer besonders bevorzugten Ausführungsform der erfindungsgemäß vorgeschlagenen Verriegelungseinheit kann das gemeinsame Antriebselement als drehbare Achse insbesondere in Form einer Stange ausgebildet sein. Die vorgeschlagene drehbare Achse weist erste und zweite Stangenteile auf, die lösbar derart aneinander festlegbar sind, dass erste und zweite Stangenteile gemeinsam drehen. An dem bzw. jedem ersten Stangenteil ist jeder, d.h. einer oder ggf. auch mehrere, Verriegelungskörper unbeweglich festgelegt, d.h. fest an dem ersten Stangenteil fixiert. An dem bzw. jedem zweiten Stangenteil ist jeder Verriegelungskörper dagegen um die drehbare Achse mit einem definierten Spiel selbst verdrehbar gelagert. Dies bedeutet, dass der Verriegelungskörper nicht nur gegenüber einem Riegelelement der Tür, welches entriegelt werden soll, sondern auch gegenüber der drehbaren Achse verdrehbar gelagert ist.

Jedes Stangenteil der ersten und zweiten Stangenteile bildet also im Wesentlichen den Verriegelungsantrieb eines Verriegelungselementmoduls für genau eine Tür. Anders ausgedrückt ist je ein Stangenteil einem Verriegelungselementmodul für eine Tür zugeordnet. Die Schließ- bzw. Öffnungsfunktion des Verriegelungselementmoduls bestimmt sich dann danach, ob es sich um ein erstes oder ein zweites Stangenteil handelt.

Ein an dem zweiten Stangenteil verdrehbar gelagerter Verriegelungskörper wird nur dann mitbewegt, wenn das Spiel in dem Verstellweg des Antriebselements überschritten wird. Nur dann erfolgt eine Öffnung des anderen/zweiten Aufnahmefachs. Damit wird bei einer Verdrehung der drehbaren Achse also zunächst eine Öffnung des ersten Aufnahmefachs und bei einer Weiterdrehung der drehbaren Achse zusätzlich die Öffnung des zweiten Aufnahmefachs bewirkt. Gegebenenfalls können mehrere erste und/oder zweite Stangenteile, die jeweils lösbar aneinander festgelegt werden können, modular vorgesehen sein, wobei jedes Stangenteil vorzugsweise genau einer Tür zugeordnet ist. Hierdurch wird ein einfacherer modularer Aufbau der Verriegelungseinheit erreicht, der eine einfache Anpassung an Kundenwünsche ermöglicht und an verschiedene, ggf. selbst modular aufgebaute, Paketbriefkästen oder andere Gehäuse anpassbar ist.

Gegebenenfalls kann eine Gehäuseöffnung auch so groß sein, dass sie durch mehrere Türen verschlossen wird. Alternativ kann auch vorgesehen sein, dass mehr als zwei Gehäuseöffnungen vorgesehen sind, wobei jede Gehäuseöffnung mittels Türen verschlossen wird, die jeweils der ersten oder der zweiten Gruppe von Türen angehören.

Diesen verschiedenen denkbaren Ausführungen ist entnehmbar, dass die Verwendung der erfindungsgemäß vorgeschlagen Verriegelungseinheit zwar besonders bevorzugt im Zusammenhang mit einem Paketbriefkasten erfolgen kann, jedoch auf diesen Anwendungsfall nicht beschränkt ist, sondern sich allgemein bei Gehäusen einsetzen lässt, die mit Türen verschließbare Öffnungen aufweisen, welche stufenweise - je nach Zugehörigkeit zu einer ersten oder zweiten Gruppe von Türen - geöffnet werden können sollen.

Um die Handhabung zu vereinfachen, kann erfindungsgemäß vorgesehen sein, dass zumindest eines der Verriegelungselementmodule als Schnappverschluss ausgebildet ist. Dies kann vorzugsweise für alle, ggf. aber auch nur für einen Teil der Verriegelungselementmodule gelten. Der Schnappverschluss soll verstanden werden als eine fallenartige Verriegelung einer Tür, die diese beim Schließen der Tür automatisch verriegelt.

Dies bedeutet vorzugsweise, dass die Verriegelungskörper der Verriegelungselementmodule in Schließrichtung vorgespannt sind und durch ein an der Tür vorhandenes Riegelelement, mit dem der Verriegelungskörper zum Verriegeln der Tür zusammenwirkt, während des Bewegens einer geöffneten Tür in die Schließstellung zwangsweise aus der Schließposition geführt wird, um nach Verbringen der Tür in die Schließstellung das Riegelelement zu umschließen (einzuschnappen) und die Tür in Schließstellung zu verriegeln.

Wenn eine Tür geöffnet wird, die durch ein Verriegelungselementmodul mit einem ersten Stangenteil verriegelt wird, an welche der Verriegelungskörper fest, d.h. unbeweglich, festgelegt ist, dreht die als gemeinsames Antriebselement ausgebildete drehbare Achse auch beim Ausweichen des Verriegelungskörpers bei dem Schließen der Tür mittels Schnappverschluss mit.

Um zu vermeiden, dass der Verriegelungskörper bzw. Schließhaken wieder einschnappt, bevor die Tür nach einer Entriegelungsbewegung geöffnet wird, kann gemäß einer bevorzugten Ausführungsform der Erfindung vorgesehen sein, dass zumindest ein Verriegelungselementmodul (aber ebenso auch mehrere oder alle) der Verriegelungselementmodule mindestens einen in Öffnungsrichtung vorgespannten Auswerfstößel zur automatischen Türöffnung bei Entriegelung der Tür aufweist. Sobald der Verriegelungskörper also das Riegelelement der Tür freigibt, wird die Tür durch den durch die Vorspannung angetriebenen Auswerfstößel automatisch geöffnet. Ein Schließen der Tür erfordert dagegen das Aufbringen einer Kraft u.a. gegen die Vorspannung des Auswerfstößels.

Das Vorsehen eines solchen erfindungsgemäßen Auswerfstößels hat auch den Vorteil, dass bei Nichtverriegelung der Tür während eines gewünschten Schließvorgangs die Tür sofort wieder aufspringt, wenn der Verriegelungskörper das Riegelelement der Tür nicht zuverlässig hält. Dies wird durch die die Tür schließende Person sofort wahrgenommen, so dass die Tür durch diese Person erneut mit erhöhter Kraft zugedrückt kann werden kann. Dies vermeidet Fehlbedienungen weitgehend.

Gemäß einer bevorzugten Ausführung der Erfindung kann der an dem zweiten Stangenteil verdrehbar gelagerte Verriegelungskörper eine Lagerhülse mit Ausnehmung aufweisen, welche auf der drehbaren Achse beweglich geführt ist, wobei ein auf der Achse (drehbare Achse) des gemeinsamen Antriebselement radial vorstehender Bolzen in die Ausnehmung der Lagerhülse eingreift und dadurch das Spiel zum Verdrehen der Lagerhülse auf der Achse definiert. Der hier beschriebene Abschnitt des gemeinsamen Antriebselements kann also insbesondere durch das zweite Stangenteil gebildet sein.

Vorzugsweise weist die Lagerhülse zwei Ausnehmungen an den sich gegenüberliegenden axialen Enden der Lagerhülse auf, in die jeweils ein auf der Achse radial vorstehender Bolzen eingreift. Dies bewirkt, dass die Lagerhülse durch die in die Ausnehmungen eingreifenden Bolzen axial fixiert ist, und durch die Ausnehmungen, in welchen die Bolzen aufgenommen sind, gleichzeitig das Spiel zum Verdrehen der Lagerhülsen auf der Achse vorgegeben ist. Ferner können an einer Seite in Längsrichtung des radial vorstehenden Bolzens jeweils zwei Ausnehmungen an einem axialen Rand der Lagerhülse ausgebildet sein, gleichsam auf der Vorder- und der Rückseite der Achse, die durch den Durchtritt des radial vorstehenden Bolzens definiert sind.

Dabei kann vorzugsweise vorgesehen sein, dass der auf der Achse radial vorstehende Bolzen in Verriegelungsstellung des auf der Lagerhülse fest fixierten Verriegelungskörpers in einem mittleren Bereich der das Spiel für das Verdrehen der Lagerhülse auf der Achse definierenden Ausnehmung aufgenommen ist.

Zum Öffnen der Tür muss also der an der Hülse fixierte Verriegelungskörper durch Verdrehen mittels des gemeinsamen Antriebselements (drehbare Achse bzw. deren zweites Stangenteil) außer Eingriff mit dem Riegelelement der Tür gebracht werden. Wenn die das Antriebselement bildende Stange (drehbare Achse) gedreht wird, bewegt sich zunächst der Bolzen in der Ausnehmung der Lagerhülse, ohne dass sich die Lagerhülse und der Verriegelungskörper mitdrehen. Solange bleibt die durch das zweite Stangenteil verriegelte Tür verriegelt. Während dieses Spiels in dem zweiten Stangenteil wird ein an dem ersten Stangenteil der drehbaren Achse unbeweglich festgelegter Verriegelungskörper bereits verdreht, so dass dieser Verriegelungskörper außer Eingriff mit dem Riegelelement der ersten Tür kommt, die so entriegelt wird, ohne dass die Tür mitentriegelt wird, die durch das vorbeschriebene Verriegelungselementmodul mit dem zweiten Stangenteil entriegelt wird.

Wenn der Bolzen an dem Rand der Ausnehmung der Lagerhülse des zweiten Stangenteils anschlägt, d.h. das durch die Ausnehmung vorgesehene Spiel aufgebraucht ist, dreht die Lagerhülse bei einer Weiterdrehung der drehbaren Achse mit, so dass auch der mit der Lagerhülse fest verbundene Verriegelungs-körper außer Eingriff mit dem Riegelelement der Tür gebracht wird und infolge auch diese zweite Tür entriegelt wird.

Mit der vorliegenden Erfindung ist es also auf einfache Weise möglich, durch nur einen Antrieb mit einem gemeinsamen Antriebselement erste und zweite Gruppen von Gehäuseöffnungen verschließenden Türen derart zu entriegeln, dass bei einer Betätigung des Antriebselements für eine bestimmte Bewegungsstrecke d.h. in eine erste Verstellposition, nur eine Gruppe von Türen, die auch als erste Gruppe bezeichnet, öffnet, und bei einer weiterführenden Bewegung des Antriebselements in eine zweite Verstellposition auch die andere Gruppe von Türen, hier auch als zweite Gruppe von Türen bezeichnet, zusätzlich öffnet.

Eine derartige Verriegelungseinheit ist besonders gut für einen Paketbriefkasten zur Aufnahme von zuzustellenden Briefen und Paketen mit einem Gehäuse mit genau einer ersten Gehäuseöffnung in ein erstes Aufnahmefach für Pakete und mit genau einer zweiten Gehäuseöffnung in ein zweites Aufnahmefach für Briefe geeignet, wobei beide Aufnahmefächer mittels jeweils einer Tür verriegelbar sind. Die Tür des zweiten Aufnahmefachs weist einen Schlitz zum Einwurf von Briefen ohne Öffnen der Tür des zweiten Aufnahmefachs auf, so dass der Postbote Briefe in der bekannten Weise einfach durch Einwurf in das zweite Aufnahmefach zustellen kann. Dieses zweite Aufnahmefach stellt also einen herkömmlichen Briefkasten dar.

Wenn dagegen ein Paket oder Päckchen zugestellt werden soll, kann der Zusteller das Antriebselement, bspw. durch Eingabe oder Übermittlung eines geeigneten Codes oder einer anderweitigen Authentifizierung, gerade so weit bewegen, dass die Tür für das Aufnahmefach für Pakete geöffnet wird. Er stellt dann das Paket ein und drückt nach dem Einstellen des Paketes die Tür des Aufnahmefachs wieder zu, die aufgrund des Schnappverschlusses wieder verriegelt.

Der Nutzer (z.B. der Besitzer) des Paketbriefkastens öffnet die Türen sowohl des ersten als auch des zweiten Aufnahmefachs, bspw. durch Eingabe oder Übermittlung eines geeigneten Codes oder einer anderweitigen Authentifizierung, indem das Antriebselement soweit bzw. so lange bewegt wird, bis beide Türen öffnen. Nach der Entnahme von Paketen aus dem ersten Aufnahmefach und/oder Briefpost aus dem zweiten Aufnahmefach kann auch der Nutzer beide Türen einfach durch Zudrücken wieder schließen und verriegeln, da beide Türen durch entsprechende Schnappverschlüsse verriegelt werden.

Dabei wird der Verriegelungskörper durch das Riegelelement der Türen in Öffnungsrichtung gedrückt. Dafür ist in der Lagerhülse das bereits beschriebene Spiel auch in die andere Richtung in der Aufnahme vorgesehen, so dass der aus der drehbaren Achse (gemeinsames Antriebselement) radial vorstehende Bolzen in der Ausnehmung ausweichen kann. Für die drehbare Achse selbst, die beim Zurückdrücken einer ersten Tür durch den fest mit der drehbaren Achse verbundenen Verriegelungskörper mitgedreht wird, ist ein entsprechendes Spiel vorzusehen, bspw. in der Kopplung mit einem Antrieb.

Erfindungsgemäß kann gemäß einer bevorzugten Ausführungsform der vorliegenden Erfindung das gemeinsame Antriebselement, also insbesondere die drehbare Achse, über eine Kopplung mit oder ohne Getriebe mit einem vorzugsweise elektrisch betätigbaren Antrieb verbunden sein. Vorzugsweise weist der Antrieb einen Elektromotor mit entsprechender Steuerung auf.

Die Steuerung oder ein Prozessor kann Berechtigungsprüfmittel beinhalten, die bspw. mittels Funktechnologie empfangene Berechtigungsinformation (oder aus unter Verwendung von Berechtigungsinformation erzeugte Information) auswerten, um das Vorliegen einer Berechtigung zum Entriegeln von ein oder mehreren Türen zu überprüfen. Hierdurch wird ein zerstörungsfreier Fremdzugriff weitestgehend ausgeschlossen. Der Zugang zu dem Paketbriefkasten kann beispielsweise über die Near-Field-Communication (NFC)- und/oder Radio Frequency Identification (RFID)-Funktechnologie erfolgen. Über diesen Lösungsansatz soll eine drahtlose Kommunikation zwischen Paketbriefkasten und einem Identifizierungsmittel (beispielsweise ein Token oder Tag, auf dem die Berechtigungsinformation, beispielsweise ein Code oder elektronischer Schlüssel, gespeichert ist) einer Person erfolgen. Dies geschieht beispielsweise über eine Zugangselektronik, bei der ein Zusteller lediglich einen RFID- oder NFC-Tag oder einen RFID/NFC-fähigen Handscanner (also einem tragbaren Gerät zur optischen Erfassung von Barcodes) mit der Berechtigungsinformation einsetzen muss und ihm somit ein separater Schlüsselbund mit körperlichen Schlüsseln oder ähnliches erspart bleibt. Ferner wird dem Kunden, also dem Besitzer des Paketkastens, jederzeit vor seiner Haustür Zugriff zu seinem Paketbriefkasten und somit zu seinem Paket bzw. den Briefen gewährt. Dieser Zugriff kann über einen RFID- oder NFC-Tag (z.B. als Schlüsselanhänger-Clip) oder eine bspw. auf einem Mobiltelefon ausführbare Applikation (App) realisiert werden.

Auch wenn die vorbeschriebene elektronische, auf Funktechnologie basierende Authentifizierung erfindungsgemäß bevorzugt sein kann, kann ein erfindungsgemäßer Antrieb aber auch mechanisch erfolgen, bspw. über einen körperlichen Schlüssel zur Freigabe von unter Vorspannung stehenden Drehelementen. Die Vorspannung der Drehelemente kann bspw. beim Verschließen der Türen jedes Mal wieder neu aufgebaut werden.

Wenn ein Verriegelungselementmodul mit einem ersten Stangenteil als Schnappverschluss ausgebildet ist, dreht das gemeinsame Antriebselement, wie bereits erläutert, beim Schließen der Tür entgegen der Vorspannungsrichtung mit. In diesem Fall ist in der Kopplung zwischen dem gemeinsamen Antriebselement und dem Antrieb ein entsprechendes Spiel entgegen der Öffnungsbewegung des gemeinsamen Antriebselements vorzusehen. Dies kann durch den Fachmann in vergleichbarer Weise gelöst werden, beispielsweise wie zuvor für den mit einem definierten Spiel auf der durch die drehbare Achse (gemeinsames Antriebselement) gelagerten Verriegelungskörper bei dem zweiten Stangenteil beschrieben.

Um ein Verriegeln der Tür auf einfache Weise erreichen zu können, kann das gemeinsame Antriebselement nach der Bewegung zum Öffnen der Türen bspw. durch den Antrieb oder einen mechanischen wirkenden Rückstellmechanismus wieder in die der Verriegelungsstellung der Verriegelungskörper entsprechende Ausgangsstellung zurück bewegt werden, in der der Schnappverschluss einfach wirken kann. Sensoren zum Erkennen der Bewegungsstellung des Antriebselements, d.h. der drehbaren Achse, können bspw. über eine Magnetfeldänderung in der Kopplung des Antriebselements mit dem Antrieb vorgesehen sein. Die Positionserkennung kann dann über einen Magneten mit einem geeigneten Magnetfeldsensor, bspw. einem Hall-Sensor, erfolgen.

Erfindungsgemäß können ein oder mehrere Verriegelungskörper auf einem Stangenteil in axialer Richtung, bezogen auf die horizontale Mittelachse des Stangenteils, spiegelsymmetrisch angeordnet sein. Das heißt, dass die Verriegelungskörper auf beiden Hälften des Stangenteils, bezogen auf die Mitte des Stangenteils, symmetrisch angeordnet sind. Bei nur einem Verriegelungskörper bzw. einer ungeraden Anzahl von Verriegelungskörpern ist jeweils ein Verriegelungskörper in der Mitte des Stangenteils vorgesehen. Eine gerade Anzahl bzw. die nach Anbringen eines Verriegelungskörpers in der Mitte ggf. verbleibende gerade Anzahl der Verriegelungskörper ist dann jeweils symmetrisch um die Mitte über die drehbare Achse verteilt. Hierdurch wird erreicht, dass jedes Stangenteil durch Drehen um 180° gleichermaßen bei einem Rechts- oder Linksanschlag der Türen verwendet werden kann, weil die Verriegelungskörper in jeder der möglichen um 180° gedrehten Montagepositionen der Stangenteile mit den Riegelelementen der Türen zusammenwirken.

Ergänzend können im Hinblick auf einen einfachen modularen Aufbau des erfindungsgemäßen Verriegelungskörpers an den ersten und zweiten Stangenteilen jeweils an den Enden Kopplungen mit Koppelstücken vorgesehen sein, die um die horizontale Mittelachse des Stangenteils symmetrisch aufgebaut sind und eine Kopplung der verschiedenen Stangenteile derart bewirken, dass die durch die verschiedenen Stangenteile gebildete drehbare Stange als gemeinsames Antriebselement dient. Auch hierdurch wird eine einfache Rechts- oder Linkstauschbarkeit bei modularer Kopplung von erstem und zweitem Stangenteil ermöglicht.

Eine besonders einfache Montage lässt sich erreichen, wenn ein Montageträger, bspw. in Form eines Montageblechs, vorgesehen ist, auf dem die Verriegelungselementmodule bezogen auf die Achsrichtung des gemeinsamen Antriebselements jeweils um 180° gedreht montierbar sind. In diesem Fall können sämtliche Teile der Verriegelungseinheit baugleich für einen Rechts- oder einen Linksanschlag der Türen verwendet werden.

Die vorgeschlagene mechanische Lösung der Verriegelungseinheit zeichnet sich also insbesondere dadurch aus, dass sie nur einen Antrieb benötigt, welcher ein gemeinsames Schließgestänge (drehbare Achse) für alle Türen betätigt und dennoch zulässt, dass nur bestimmte Türen (der ersten Gruppe) entriegelt werden, während andere Türen (der zweiten Gruppe) noch geschlossen bleiben. Weiterhin können sämtliche Türen unabhängig voneinander und in beliebiger Reihenfolge geschlossen bzw. verriegelt werden, da insoweit nur Schnappverschlüsse vorgesehen sind, ohne dass das gemeinsame Antriebselement dafür gezielt gesteuert und verdreht werden muss. Ferner können alle Elemente der Verriegelungseinheit so ausgebildet sein, dass sie eine einfache Rechts-Links-Tauschbarkeit der Türen in dem Gehäuse zum Verschließen der Gehäuseöffnungen vorsehen.

Die zuvor beschriebenen beispielhaften Ausführungsformen der erfindungsgemäßen Verriegelungseinheit, ihre einzelnen Merkmale und Vorteile sollen auch für das erfindungsgemäße Gehäuse offenbart verstanden werden.

Eine beispielhafte Ausführungsform des erfindungsgemäßen Gehäuses umfasst Berechtigungsprüfmittel zur Prüfung der jeweiligen Berechtigung von Personen (z.B. von einem oder mehreren Zustellern oder einem Besitzer des Gehäuses), ein oder mehrere der Türen des Gehäuses zu entriegeln, anhand von beim Nachweis der Berechtigung durch die Personen jeweils eingesetzter Berechtigungsinformation, und Steuerungsmittel zum Ansteuern eines dem gemeinsamen Antriebselement zugeordneten Antriebs in Abhängigkeit des Ergebnisses der Prüfung der Berechtigungsprüfmittel, so dass das gemeinsame Antriebselement die erste Verstellposition einnimmt, wenn bei dem Berechtigungsnachweis erste Berechtigungsinformation eingesetzt wurde, und die zweite Verstellposition einnimmt, wenn bei dem Berechtigungsnachweis zweite Berechtigungsinformation eingesetzt wurde.

Die Berechtigungsprüfmittel können beispielsweise durch einen Prozessor gebildet werden, beispielsweise durch einen Mikroprozessor, einen DSP (Digital Signal Processor) oder einen FPGA (Field Programmable Gate Array), um nur ein paar nicht einschränkende Beispiele zu nennen. Die Berechtigungsprüfmittel können beispielsweise als Computerprogrammanweisungen in einem Speicher des Prozessors gespeichert sein und durch den Prozessor ausgeführt werden, wenn das Computerprogramm mit diesen Anweisungen auf dem Prozessor läuft.

Die Berechtigungsinformation kann beispielsweise einen Code (z.B. ein Zahlen-, Buchstaben- oder kombinierter Zahlen/Buchstabencode, z.B. eine Kennung eines elektronischen Geräts wie z.B. eines Tags) oder einen elektronischer Schlüssel (z.B. einen symmetrischen Schlüssel oder einen öffentlichen oder privaten Schlüssel eines asymmetrischen Schlüsselpaares, insbesondere eines Public Key Infrastructure (PKI)-Schlüsselpaares) umfassen oder daraus bestehen. Asymmetrische Schlüssel können beispielsweise nach dem RSA (Rivest, Shamir, Adleman) - Verfahren erzeugt werden. Ein Beispiel für einen symmetrischen Schlüssel ist ein AES (Advanced Encryption Standard) - Schlüssel. Die Berechtigungsinformation kann zusätzlich oder alternativ verschlüsselte Information umfassen oder daraus bestehen. Beispielsweise kann die Berechtigungsinformation eine mit einem Schlüssel verschlüsselte Kennung des Gehäuses, zu dessen Entriegelung die Berechtigungsinformation berechtigt (und optional weitere mit dem Schlüssel verschlüsselte Informationen, beispielsweise einen Zeitpunkt, zu dem die Berechtigungsinformation erzeugt wurde, und/oder eine Zufallszahl, beispielsweise zur Verhinderung von Replay-Attacken, und/oder Informationen betreffend den Gütigkeitszeitraum der Berechtigungsinformation), umfassen oder daraus bestehen. Das Gehäuse verfügt dann beispielsweise über den gleichen oder einen korrespondierenden Schlüssel (oder kann diesen erzeugen) zur Entschlüsselung der zum Berechtigungsnachweis gegenüber dem Gehäuse verwendeten verschlüsselten Kennung (und gegebenenfalls der weiteren verschlüsselten Informationen) und kann dann prüfen, ob die entschlüsselte Kennung (und gegebenenfalls die weiteren entschlüsselten Informationen) mit der Kennung des Gehäuses, die beispielsweise im Gehäuse gespeichert ist, (und gegebenenfalls entsprechenden im Gehäuse gespeicherten oder erzeugbaren Informationen) übereinstimmt und damit die Berechtigung zur Entriegelung von ein oder mehreren Türen des Gehäuses vorliegt.

Die Berechtigungsinformation kann zusätzlich oder alternativ ein oder mehrere Berechtigungskenngrößen (z.B. in unverschlüsselter Form) enthalten. Beispiele für Berechtigungskenngrößen sind eine Kennung des Gehäuses oder dessen Schlosses oder eine Kennung für eine Gruppe von Gehäusen oder deren Schlössern. Weitere Beispiele für Berechtigungskenngrößen sind Informationen betreffend den Gültigkeitszeitraum der Berechtigungsinformation (z.B. einen Zeitpunkt des Beginns der Gültigkeit und einen Zeitpunkt des Endes der Gültigkeit) oder Informationen dazu, welche Tür(en) oder Gruppe(n) von Türen eine Gehäuses mit dieser Berechtigungsinformation geöffnet werden dürfen,.

Zusätzlich zu den ein oder mehreren Berechtigungskenngrößen kann die Berechtigungsinformation das Ergebnis einer kryptographischen Operation mit einem Schlüssel über zumindest einen Teil (oder auch alle) der ein oder mehreren Berechtigungskenngrößen als eine Art Prüfinformation enthalten. Der Teil kann beispielsweise zumindest die Kennung des Gehäuses oder dessen Schlosses oder die Kennung für eine Gruppe von Gehäusen oder deren Schlössern umfassen. Das Ergebnis der kryptographischen Operation kann beispielsweise genutzt werden, um zu prüfen, dass die von der kryptographischen Operation betroffenen, unverschlüsselten Berechtigungskenngrößen seit der Erzeugung des Ergebnisses der kryptographischen Operation nicht mehr verändert wurden oder nur von einer Instanz verändert wurden, die Zugriff auf den Schlüssel hat. Beispiele für die kryptographische Operation sind eine digitale Signatur, also zum Beispiel ein (mit einem (z.B. öffentlichen) Schlüssel eines asymmetrischen Schlüsselpaares) verschlüsselter Hashwert, über den Teil der ein oder mehreren Berechtigungsgrößen, oder ein Nachrichtenauthentifizierungscode (Message Authentication Code, MAC) über den Teil der ein oder mehreren Berechtigungskenngrößen, z.B. ein Keyed-Hash MAC (HMAC, z.B. gemäß Request for Comments Dokument der Internet Engineering Taskforce (IETF) RFC 2104) oder ein Cipher-based MAC (z.B. gemäß RFC4493). Bei einem MAC fliest ein Schlüssel in die Berechnung des Hashwerts mit ein, der beispielsweise ein symmetrischer Schlüssel sein kann, z.B. ein Advanced Encryption Standard (AES) Schlüssel. Am Empfänger kann bei Kenntnis des Schlüssels oder eines korrespondierenden Schlüssels über den gleichen Teil der ein oder mehreren Berechtigungskenngrößen der MAC erneut berechnet und mit dem empfangenen MAC verglichen werden. Beispielsweise ist der Schlüssel oder der korrespondierende Schlüssel im Gehäuse gespeichert. Bei Übereinstimmung kann von der Integrität des Teils der ein oder mehreren Berechtigungskenngrößen ausgegangen werden.

Anhand der Berechtigungskenngrößen kann (insbesondere nach Überprüfung der Integrität der Berechtigungskenngrößen) geprüft werden, ob ein od. mehrere Türen des Gehäuses geöffnet werden dürfen, z.B. durch Prüfung der Berechtigungskenngrö-ßen gegen im Gehäuse beispielsweise zumindest im Zeitpunkt des Prüfens vorhandene Bezugsinformationen, beispielsweise im Gehäuse gespeicherte, ermittelbare und/oder empfangene Bezugsinformationen . So kann beispielsweise im Falle einer Kennung des Gehäuses oder für eine Gruppe von Gehäusen als Bezugsgröße eine im Gehäuse gespeicherte entsprechende Gehäusekennung oder Gruppenkennung diesen. Im Falle von ein oder mehreren einen Gültigkeitszeitraum definierenden Berechtigungskenngrößen kann die von einer Uhr des Gehäuses gelieferte Zeitinformation als Bezugsgröße dienen um zu prüfen, ob der durch die Zeitinformation definierte Zeitpunkt noch im Gültigkeitszeitraum liegt.

Die Berechtigungsinformation kann beispielsweise von einer Verwaltungseinheit, beispielsweise einem Server, erzeugt worden sein. An der Verwaltungseinheit sind beispielsweise für jedes der Gehäuse Informationen zur Erstellung der Berechtigungsinformation vorhanden, z.B. Gehäusekennungen und Schlüssel (aber beispielsweise auch weitere Informationen, z.B. betreffend den Gültigkeitszeitraum der Berechtigungsinformation). Die für ein oder mehrere Gehäuse verwendbare Berechtigungsinformation kann dann beispielsweise von der Verwaltungseinheit direkt oder indirekt auf ein tragbares elektronisches Gerät (z.B. einem RFID- oder NFC-Tag, einem Mobiltelefon oder einem Handscanner) übertragen werden, das dann zum Nachweis der Berechtigung zum Öffnen von ein oder mehreren Türen gegenüber einem Gehäuse verwendet werden kann. Im Falle von RFID- oder NFC-Tags kann die Verwaltungseinheit beispielsweise auch veranlassen, dass die Berechtigungsinformation bei der Produktion der Tags bereits in diese eingeschrieben wird. Das Übermitteln der Berechtigungsinformation auf ein Mobiltelefon eines Besitzers des Gehäuses kann beispielsweise durch eine App geschehen, die mit der Verwaltungseinheit kommuniziert, beispielsweise über eine drahtlose Verbindung, die beispielsweise durch Verschlüsselung gesichert sein kann. Im Falle eines Handscanners kann die Berechtigungsinformation beispielsweise von der Verwaltungseinheit entweder direkt oder über eine oder mehrere zwischengeschaltete Vorrichtung(en), beispielsweise einen Computer und/oder eine Dockingstation, übertragen werden, wobei der Computer mit der Verwaltungseinheit beispielsweise über das Internet verbunden ist und die Berechtigungsinformationen für einen oder mehrere Gehäuse dann drahtgebunden (z.B. über eine Docking-Station) oder drahtlos an den Handscanner überträgt. Die in der Berechtigungsinformation enthaltenen oder bei Erzeugung von zumindest Bestandteilen der Berechtigungsinformation verwendeten Schlüssel (z.B. die zur Erstellung des MAC oder der digitalen Signatur verwendeten Schlüssel) sind beispielsweise nur der Verwaltungseinheit und dem jeweiligen Gehäuse bekannt, sind aber beispielsweise nicht dem tragbaren elektronischen Gerät oder dessen Benutzer bekannt. Die Berechtigungsinformation beruht dann also auf einem Geheimnis (dem oder den Schlüssel(n)), das zwischen Verwaltungseinheit und Gehäuse geteilt wird.

Der bei der Erzeugung von zumindest Teilen der Berechtigungsinformation wie zuvor beschrieben verwendete Schlüssel kann dabei beispielsweise nur bei der Erzeugung (z.B. durch Verschlüsselung und/oder MAC-Berechnung und/oder Berechnung einer digitalen Signatur von Information, z.B. einer Gehäusekennung) einer Instanz von Berechtigungsinformation verwendet werden, aber nicht bei der Erzeugung weiterer Instanzen von Berechtigungsinformation für dasselbe Gehäuse oder weiterer Instanzen von Berechtigungsinformation überhaupt. Wenn die Berechtigungsinformation beispielsweise auf einem tragbaren elektronischen Gerät (z.B. einem RFID- oder NFC-Tag, einem Mobiltelefon oder einem Handscanner) gespeichert ist, kann beispielsweise zur Erzeugung der Berechtigungsinformation für jedes der elektronischen Geräte ein anderer Schlüssel verwendet werden. Dieser Schlüssel kann beispielsweise von einer Kennung des jeweiligen elektronischen Geräts abhängen, also beispielsweise unter Verwendung dieser Kennung ausgewählt oder erzeugt werden, beispielsweise durch einen vordefinierten (aber geheimen) Algorithmus. Ein Gehäuse kann dann diesen Schlüssel (bei symmetrischer Verschlüsselung) oder einen korrespondierenden Schlüssel (z.B. bei asymmetrischer Verschlüsselung) anhand der Kennung des elektronischen Geräts (die beispielsweise zusammen mit der Berechtigungsinformation an das Gehäuse übermittelt wird, oder separat davon) auswählen oder erzeugen. Dadurch ist vorteilhaft sichergestellt, dass die Berechtigungsinformation nicht gefälscht oder als einfache Kopie zusammen mit einem anderen elektronischen Gerät verwendet werden kann. Alternativ kann zur Erzeugung der Berechtigungsinformation für jedes der elektronischen Geräte oder zumindest einer Gruppe von zwei oder mehr elektronischen Geräte derselbe Schlüssel verwendet werden, dementsprechend muss dann auch im Gehäuse nur dieser Schlüssel oder ein korrespondierender Schlüssel verwendet (und beispielsweise gespeichert) werden.

Die jeweilige Berechtigungsinformation kann zumindest einer der Personen (oder auch allen) zumindest zeitweise, insbesondere für den Zeitpunkt des Nachweises der Berechtigung, zugeordnet sein. Die Berechtigungsinformation kann einer Person beispielsweise dadurch zugeordnet sein, dass die Person einen Datenträger mit der darauf gespeicherten oder repräsentierten Berechtigungsinformation zumindest zum Zeitpunkt des Nachweises der Berechtigung (oder auch ständig) besitzt oder kontrolliert oder dass die Berechtigungsinformation zumindest zum Zeitpunkt des Nachweises der Berechtigung in einem elektronischen Gerät der Person gespeichert ist. Bei dem Datenträger kann es sich beispielsweise um einen Speicher eines RFID- oder NFC-Tags, eine Smartcard oder um ein Etikett mit aufgedrucktem Barcode (beispielsweise auf einer Warensendung) handeln, um nur ein paar Beispiele zu nennen. Bei dem elektronischen Gerät kann es sich beispielsweise um ein Mobiltelefon oder um einen Handscanner eines Zustellers handeln. Die Berechtigungsinformation kann der Person beispielsweise auch dadurch zugeordnet sein, dass der Person die Berechtigungsinformation bekannt gemacht wurde, beispielsweise durch Übersendung einer Nachricht, die die Berechtigungsinformation enthält.

Die Berechtigungsinformation kann beispielsweise dadurch beim Nachweis der Berechtigung eingesetzt werden, dass die Person die Berechtigungsinformation oder Information, die unter Verwendung der Berechtigungsinformation erzeugt wurde, in eine Eingabeeinheit (beispielsweise eine Tastatur oder einen Barcode-Scanner) des Gehäuses eingibt oder (verschlüsselt oder unverschlüsselt) an eine Empfangseinheit (beispielsweise eine RFID- oder NFC-Leseeinheit) des Gehäuses übermittelt. Nicht abschließende Beispiele für eine Eingabeeinheit sind eine Tastatur, akustische Erfassungsmittel (z.B. Spracherkennungsmittel) oder optische Erfassungsmittel (z.B. ein Scanner, insbesondere ein Barcodescanner, wobei die Berechtigungsinformation oder die damit erzeugte Information dann in einem Barcode repräsentiert ist). Nicht abschließende Beispiele für ein Empfangsmittel sind Empfänger für drahtlose Informationsübermittlungstechnologien wie z.B. RFID-, Smartcard-, NFC-, Bluetooth-, WLAN- und/oder Mobilfunkempfänger. Die Empfangsmittel können beispielsweise Teil von kombinierten Sende- und Empfangsmitteln sein, beispielsweise also Teil von Kommunikationsmitteln. Bei der Eingabeeinheit kann die Berechtigungsinformation oder die Information, die unter Verwendung der Berechtigungsinformation erzeugt wurde, beispielsweise durch Eintippen in eine Tastatur, durch Sprechen in die akustischen Erfassungsmittel oder durch Vorhalten vor die optischen Erfassungsmittel eingegeben werden. Bei den Empfangsmitteln kann die Berechtigungsinformation oder die Information, die unter Verwendung der Berechtigungsinformation erzeugt wurde, beispielsweise durch Betätigung eines Aktionselements (z.B. einer Taste oder eines Schalters oder eines auf einem graphischer Anzeigeeinheit eines elektronischen Geräts dargestellten Buttons oder Menüeintrags) einer Vorrichtung (z.B. eines Mobiltelefons, Handscanners oder Handsenders) oder durch Annäherung einer Vorrichtung (z.B. eines RFID- oder NFC-Tags oder eines RFID- oder NFC-fähigen elektronischen Geräts wie beispielsweise einem Mobiltelefon oder einem Handscanner), die die Berechtigungsinformation speichert, an die Empfangsmittel, beispielsweise in einen vordefinierten Reichweitenbereich des Empfangsmittels.

Bei den RFID- oder NFC-Tags kann es sich um Tags (z.B. tragbare Elemente mit geringen Abmessungen im Bereich von beispielsweise wenigen Zentimetern (beispielsweise weniger als 5 cm) Durchmesser oder Kantenlänge, wie z.B. Schlüsselanhänger oder Karten im Kreditkartenformat) mit eigener Stromversorgung oder um Tags ohne eigene Stromversorgung handeln. Die Tags können beispielsweise bei 120-135 kHz, 13,56 MHz oder 865-869 MHz arbeiten, es sind aber auch andere, insbesondere höhere Frequenzen möglich. Die Informationsübertragung kann beispielsweise auf kapazitiver Kopplung, induktiver Kopplung oder auf elektromagnetischen Wellen (z.B. Backscatter-Verfahren) beruhen. Der RFID- oder NFC-Tag kann beispielsweise eine Antenne, einen analogen Schaltkreis zum Senden und Empfangen (auch als Transceiver bezeichnet), einen digitalen Schaltkreis (z.B. einen Mikrocontroller) und einen Speicher (beispielsweise ein EEPROM - Electrically Erasable Programmable Read-Only Memory) umfassen. In dem Speicher ist die Berechtigungsinformation gespeichert, beispielsweise in Form einer Nummer oder Kennung (UID - Unique Identification), die beispielsweise für den jeweiligen Tag einzigartig sein kann. Die Berechtigungsinformation kann beispielsweise auf ein von einer RFID- oder NFC-Leseeinheit erzeugtes hochfrequentes Signal aufmoduliert werden, beispielsweise in Form einer Lastmodulation. Die Leseeinheit kann dann dadurch die Berechtigungsinformation vom Tag empfangen. RFID- oder NFC-Tags sind beispielsweise gemäß den ISO-Standards 18000,11784/11785 und dem ISO/IEC-Standard 14443 und 15693 spezifiziert, um nur ein paar nicht einschränkende Beispiele zu nennen.

Die Prüfung der Berechtigung kann beispielsweise dadurch erfolgen, dass die Berechtigungsprüfmittel die zum Nachweis der Berechtigung eingesetzte Berechtigungsinformation mit in einem Speicher des Gehäuses gespeicherter Berechtigungsinformation vergleichen und beispielsweise bei Übereinstimmung oder vordefinierter Korrespondenz der eingesetzten und der gespeicherten Berechtigungsinformation zu dem Ergebnis kommen, dass eine Berechtigung vorliegt. Die Prüfung der Berechtigung kann alternativ auch dadurch erfolgen, dass die Berechtigungsprüfmittel die zum Nachweis der Berechtigung eingesetzte Berechtigungsinformation verarbeiten, und ein Ergebnis der Verarbeitung mit in einem Speicher des Gehäuses gespeicherter Information vergleichen und bei Übereinstimmung oder vordefinierter Korrespondenz zu dem Ergebnis kommen, dass eine Berechtigung vorliegt. Die Verarbeitung kann beispielsweise eine Entschlüsselung umfassen oder daraus bestehen, beispielsweise wenn die Berechtigungsinformation verschlüsselte Information (z.B. eine verschlüsselte Kennung des Gehäuses) umfasst oder daraus besteht, die nach Entschlüsselung mit im Gehäuse gespeicherter Information (z.B. der Kennung des Gehäuses) verglichen wird. Die Prüfung der Berechtigung kann beispielsweise auch dadurch erfolgen, dass die Berechtigungsprüfmittel Information, die unter Verwendung von Berechtigungsinformation erzeugt und von der Person zum Nachweis der Berechtigung eingesetzt wurde, unter Zuhilfenahme von in einem Speicher des Gehäuses gespeicherter korrespondierender Berechtigungsinformation überprüfen. Dies kann beispielsweise im Rahmen eines Challenge-Response-Verfahrens geschehen, bei dem der Person eine Datenfolge, beispielsweise eine Zufallsdatenfolge, übermittelt wird, die Person zum Nachweis ihrer Berechtigung auf die Datenfolge Berechtigungsinformation (z.B. einen ersten Schlüssel zur Verschlüsselung der Datenfolge) anwendet und das Ergebnis an die Berechtigungsprüfmittel übermittelt (z.B. durch Eingabe in eine Eingabeeinheit des Gehäuses oder Übertragung an eine Empfangseinheit des Gehäuses), die Berechtigungsprüfmittel dann auf das übermittelte Ergebnis die korrespondierende Berechtigungsinformation (z.B. einen zweiten Schlüssel zur Entschlüsselung des übermittelten Ergebnisses) anwenden, das dadurch erhaltene Ergebnis mit der ursprünglich an die Person übermittelten Datenfolge vergleichen und bei Übereinstimmung zu dem Ergebnis kommen, dass eine Berechtigung vorliegt. Vorteil dieses Verfahrens ist, dass die Berechtigungsinformation hier nicht im Klartext übertragen werden muss. Der erste und zweite Schlüssel können dabei beispielsweise jeweils gleich sein (als sog. symmetrischer Schlüssel). Alternativ können der erste und der zweite Schlüssel ein asymmetrisches Schlüsselpaar einer PKI bilden, wobei beispielsweise der erste Schlüssel ein öffentlicher Schlüssel und der zweite Schlüssel ein privater Schlüssel ist. Wenn die Berechtigungsinformation ein oder mehrere Berechtigungskenngrößen und das Ergebnis (z.B. einen MAC) einer kryptographischen Operation über zumindest einen Teil der ein oder mehreren Berechtigungskenngrößen enthält, kann die Prüfung der Berechtigung beispielsweise dadurch erfolgen, dass die Berechtigungsprüfmittel die kryptographische Operation über die ein oder mehreren empfangenen Berechtigungskenngrößen wiederholt und das Ergebnis mit dem empfangenen Ergebnis vergleicht (im Falle eines asymmetrischen Schlüsselpaars wird stattdessen eine Prüfung der empfangenen digitalen Signatur über zumindest einen Teil der Berechtigungskenngrößen durchgeführt, beispielsweise durch Entschlüsselung eines in der digitalen Signatur enthaltenen verschlüsselten Hashwerts, lokale Neuerzeugung des Hashwerts und Vergleich der beiden Hashwerte). Bei Übereinstimmung werden dann die einzelnen Berechtigungskenngrößen gegen im Gehäuse gespeicherte, im Gehäuse erzeugte und/oder vom Gehäuse empfangene Informationen geprüft und in Abhängigkeit davon entschieden, ob einer Berechtigung zum Öffnen von ein oder mehreren Türen des Gehäuses vorliegt.

Die Steuerungsmittel des erfindungsgemäßen Gehäuses können beispielsweise eine Antriebssteuerung darstellen, die Steuersignale von den Berechtigungsprüfmitteln empfängt (in Abhängigkeit des Ergebnisses der Berechtigungsprüfung, also beispielsweise ob erste oder zweite Berechtigungsinformation zum Berechtigungsnachweis verwendet wurde) und den Antrieb (beispielsweise einem Motor) gemäß diesen Steuersignalen ansteuert. Die Steuerungsmittel können zusammen mit den Berechtigungsprüfmitteln durch einen Prozessor gebildet werden. Alternativ können die Steuerungsmittel separat von den Berechtigungsprüfmitteln ausgebildet sein, beispielsweise als Treiberstufe für den Antrieb.

Bei einer beispielhaften Ausführungsform des erfindungsgemäßen Gehäuses wird die erste Berechtigungsinformation von einem Zusteller oder einer Gruppe von Zustellern eingesetzt und berechtigt diesen/diese, lediglich die eine der Türen oder lediglich die erste Gruppe von Türen der Türen zu entriegeln, um ihm/ihnen das Einstellen mindestens einer Sendung in die jeweilige(n) Gehäuseöffnung(en) und/oder das Abholen von ein oder mehreren Sendungen, insbesondere Paketen, aus der/den jeweiligen Gehäuseöffnung(en) zu ermöglichen, und die zweite Berechtigungsinformation berechtigt mindestens eine dem Gehäuse zugeordnete Person, alle der Türen zu entriegeln, um ihm das Entnehmen von ein oder mehreren zugestellten Sendungen, insbesondere Paketen, aus der/den Gehäuseöffnungen, die der Tür (6) oder der erste Gruppe von Türen zugeordnet ist/sind, oder das Einstellen von ein oder mehreren abzuholenden Sendungen, insbesondere Paketen, in die Gehäuseöffnung, die der Tür oder der ersten Gruppe von Türen zugeordnet ist/sind, sowie das Entnehmen von ein oder mehreren zugestellten Sendungen, insbesondere Briefen, aus der/den Gehäuseöffnungen, die der/den restlichen Türen der Türen zugeordnet ist/sind, zu ermöglichen.

Die Person, der das Gehäuse zugeordnet ist, ist dabei weder der Zusteller noch gehört sie zu der Gruppe von Zustellern. Es kann sich beispielsweise um eine Person handeln, die - beispielsweise als Kunde - Dienstleistungen des Zustellers oder der Gruppe von Zustellern in Anspruch nimmt (wobei die Dienstleistungen beispielsweise zumindest unter Verwendung des Gehäuses erbracht werden). Es kann sich dabei beispielsweise um Paketdienstleistungen handeln. Die Person, der das Gehäuse zugeordnet ist, kann beispielsweise der Besitzer oder Mieter des Gehäuses sein.

Beispielsweise können der Zusteller oder die Gruppe von Zustellern zumindest im Zeitpunkt des Nachweises der Berechtigung die erste Berechtigungsinformation zum Nachweis der Berechtigung einsetzen. Beispielsweise verfügt der Zusteller (oder die Gruppe von Zustellern) zumindest im Zeitpunkt des Nachweises über einen Datenträger (z.B. eines RFID- oder NFC-Tags oder eines Handscanners), auf dem die erste Berechtigungsinformation gespeichert ist, oder kennen die erste Berechtigungsinformation, oder verfügen über eine Warensendung, auf der ein Etikett mit einer Repräsentation der Berechtigungsinformation (z.B. in Form eines Barcodes oder eines Transponderetiketts) aufgebracht ist.

Ebenso kann beispielsweise die dem Gehäuse zugeordnete Person (die weder der Zusteller ist noch der Gruppe von Zustellern angehört) zumindest im Zeitpunkt des Nachweises der Berechtigung die zweite Berechtigungsinformation zum Nachweis der Berechtigung einsetzen. Beispielsweise verfügt diese Person zumindest im Zeitpunkt des Nachweises über einen Datenträger (z.B. eines RFID- oder NFC-Tags oder eines Mobiltelefons), auf dem die zweite Berechtigungsinformation gespeichert ist, oder kennt die Berechtigungsinformation.

Bei einer beispielhaften Ausführungsform des erfindungsgemäßen Gehäuses sind die Berechtigungsprüfmittel eingerichtet zu verhindern, dass die Tür oder die erste Gruppe von Türen der Türen des Gehäuses zweimal unmittelbar aufeinanderfolgend unter jeweiliger Verwendung der ersten Berechtigungsinformation entriegelt wird/werden. Es kann dann beispielsweise erforderlich sein, dass nach jeder Verwendung der ersten Berechtigungsinformation zur Entriegelung eine Verwendung der zweiten Berechtigungsinformation zur Entriegelung stattfindet. Dies kann dazu dienen zu verhindern, dass beispielsweise ein Zusteller, der z.B. die erste Berechtigungsinformation verwendet, mehrfach die Tür (z.B. die Pakettür) des Gehäuses entriegeln kann oder dass ein zweiter Zusteller, der z.B. die erste Berechtigungsinformation verwendet, die Tür (z.B. die Pakettür) des Gehäuses entriegeln kann, nachdem ein erster Zusteller, der z.B. ebenfalls die erste Berechtigungsinformation verwendet, die Tür des Gehäuses entriegelt und ein Paket eingestellt hat, bevor der Besitzer des Gehäuses, der z.B. die zweite Berechtigungsinformation verwendet, das eingestellte Paket entnommen hat. Dazu können die Berechtigungsprüfmittel beispielsweise ein Logbuch über die erfolgten Berechtigungsnachweise und die dabei verwendeten Berechtigungsinformationen führen und bei einem erneuten Berechtigungsnachweis mit erster Berechtigungsinformation überprüfen, ob bereits schon der letzte Berechtigungsnachweis mit erster Berechtigungsinformation stattgefunden hat. Wenn dies der Fall ist, kann beispielsweise eine Ansteuerung der Steuerungsmittel unterbleiben (so dass das gemeinsame Antriebselement nicht bewegt wird) und stattdessen eine optische oder akustische Warnung ausgegeben werden.

Die erfindungsgemäße Aufgabe wird des Weiteren gelöst durch ein Verfahren zum Entriegeln einer oder mehrerer Türen eines erfindungsgemäßen Gehäuses, das die oben beschriebenen Berechtigungsprüfmittel und die Steuerungsmittel umfasst. Das Verfahren umfasst das Nachweisen, gegenüber den Berechtigungsprüfmitteln des Gehäuses, der Berechtigung einer Person, ein oder mehrere Türen des Gehäuses zu entriegeln, durch Einsatz der ersten oder zweiten Berechtigungsinformation. Das Verfahren, insbesondere das Nachweisen, kann beispielsweise von der Person ausgeführt werden, beispielsweise indem die Person mit dem Gehäuse interagiert oder eine Vorrichtung (beispielsweise ein RFID- oder NFC-Tag, einen Handscanner oder ein Mobiltelefon) zur Interaktion mit dem Gehäuse nutzt. Die zuvor beschriebenen beispielhaften Ausführungsformen der erfindungsgemäßen Verriegelungseinheit und des erfindungsgemäßen Gehäuses, die diesbezüglichen einzelnen Merkmale und Vorteile sollen daher auch für das erfindungsgemäße Verfahren offenbart verstanden werden.

Gemäß einer beispielhaften Ausführungsform des erfindungsgemäßen Verfahrens umfasst das Nachweisen der Berechtigung folgendes:
- Eingeben der ersten oder zweiten Berechtigungsinformation oder von Information, die unter Verwendung der ersten oder zweiten Berechtigungsinformation erzeugt wurde, in eine Eingabeeinheit des Gehäuses (die beispielsweise mit den Berechtigungsprüfmitteln operativ verbunden ist, so dass die Berechtigungsinformation oder die Information an die Berechtigungsprüfmittel weitergeleitet werden kann), oder
- Übermitteln, insbesondere drahtloses Übermitteln, der ersten oder zweiten Berechtigungsinformation oder von Information, die unter Verwendung der ersten oder zweiten Berechtigungsinformation erzeugt wurde, an eine Empfangseinheit des Gehäuses (die beispielsweise mit den Berechtigungsprüfmitteln operativ verbunden sind, so dass die Berechtigungsinformation oder die Information an die Berechtigungsprüfmittel weitergeleitet werden kann).

Wie dieses Eingeben oder Übermitteln stattfinden kann, wurden bereits oben anhand von Beispielen erläutert. Das Eingeben oder Übermitteln kann beispielsweise durch die Person selbst vorgenommen oder zumindest durch die Person angestoßen werden, beispielsweise durch Bedienung/Handhabung einer Vorrichtung (z.B. eines RFID- oder NFC-Tags, eines Mobiltelefons oder eines Handscanners), die die Berechtigungsinformation speichert oder eines Gegenstands (z.B. eines Pakets), der die Berechtigungsinformation aufweist.

Gemäß einer beispielhaften Ausführungsform des erfindungsgemäßen Verfahrens berechtigt die erste Berechtigungsinformation zur Entriegelung von jeweils ein oder mehreren Türen von mehreren Gehäusen (beispielsweise Paketbriefkästen). Diese mehrere Gehäusen sind beispielsweise jeweils unterschiedlichen Besitzern zugeordnet und/oder sind an unterschiedlichen Orten aufgestellt (beispielsweise an unterschiedlichen Orten in einem Zustellbereich des Zustellers). Die erste Berechtigungsinformation kann also beispielsweise zur Entriegelung einer Pakettür eines ersten Paketbriefkastens als auch einer Pakettür eines zweiten Paketbriefkastens und gfs. der Pakettür von ein oder mehreren weiteren Paketbriefkästen berechtigen, kann aber beispielsweise jeweils nicht zur Entriegelung der Brieftüren berechtigen. Insbesondere wird gemäß dieser Ausführungsform also zur Entriegelung der ein oder mehreren Türen jedes der mehreren Gehäuse die gleiche erste Berechtigungsinformation verwendet (beispielsweise der (exakt) gleiche Code oder Schlüssel). Diese erste Berechtigungsinformation kann nichtsdestotrotz eine beschränkte Gültigkeit haben, beispielsweise eine zeitlich beschränkte Gültigkeit. Beispielsweise kann die Gültigkeit auf einen Tag beschränkt werden, was beispielsweise anhand des Datums überprüft werden kann, wenn z.B. die erste Berechtigungsinformation unter Verwendung des Datums erstellt wurde oder dieses enthält.

Im Gegensatz dazu kann allerdings die zweite Berechtigungsinformation lediglich zur Entriegelung der Türen genau eines Gehäuses berechtigen.

Beispielsweise kann die erste Berechtigungsinformation (also beispielsweise der gleiche Code oder Schlüssel) dann in mehreren Gehäusen (beispielsweise in deren Speichern) hinterlegt sein oder zumindest zur Öffnung von jeweils ein oder mehreren Türen berechtigen. Damit wird vermieden, dass ein Zusteller für jedes Gehäuse jeweilige erste Berechtigungsinformation zur Verfügung haben muss, was bei Speicherung der ersten Berechtigungsinformation beispielsweise in einem RFID- oder NFC-Tag des Zustellers dazu führen würde, dass der Zusteller für jedes Gehäuse, in das er eine oder mehrere Sendungen einstellen soll, einen gesonderten RFID- oder NFC-Tag mitführen und jeweils heraussuchen müsste.

Beispielsweise enthält die erste Berechtigungsinformation eine Kennung derjenigen ein oder mehreren Gehäuse, für die die erste Berechtigungsinformation gelten soll, wobei die Kennung als Gruppenkennung ausgebildet ist und anhand einer jeweiligen im Gehäuse gespeicherten Kennung prüfbar ist, ob das Gehäuse zu der durch die Gruppenkennung identifizierten Gruppe gehört oder nicht. Beispielsweise kann die gleiche Gruppenkennung in allen Gehäusen der Gruppe hinterlegt sein, oder zumindest einen Teil der in den Gehäusen der Gruppe jeweils hinterlegten individuellen Gehäusekennungen bilden.

Wenn die Berechtigungsinformation ein oder mehrere Berechtigungskenngrößen und das Ergebnis einer kryptographischen Operation über zumindest einen Teil dieser ein oder mehreren Berechtigungskenngrößen enthält, kann beispielsweise durch folgende Vorgehensweise sichergestellt werden, dass die gleiche Berechtigungsinformation für mehrere Gehäuse nutzbar ist: Als eine der Berechtigungskenngrößen wird eine Gruppenkennung derjenigen Gruppe von Gehäusen gewählt, für die die Berechtigungsinformation gelten soll. Mit dieser Kennung assoziierte Kennungen werden in den Gehäusen der Gruppe von Gehäusen gespeichert, um den Gehäusen bei Empfang der Gruppenkennung eine Prüfung zu ermöglichen, ob das jeweilige Gehäuse zu dieser Gruppe gehört oder nicht. Die assoziierten Kennungen können dabei beispielsweise mit der Gruppenkennung übereinstimmen. Die Gehäuse können dann beispielsweise sowohl eine Gruppenkennung als auch eine individuelle Gehäusekennung aufweisen. Alternativ kann beispielsweise ein festgelegter Teil der assoziierten Kennungen mit der Gruppenkennung übereinstimmen, beispielsweise eine bestimmte Anzahl von Stellen der assoziierten Kennungen, wodurch die assoziierten Kennungen dann beispielsweise immer noch individuell für jedes Gehäuse sind, aber zumindest in dem festgelegten Teil übereinstimmen. Zusätzlich wird bei der Erzeugung der Berechtigungsinformation dann für die kryptographische Operation (z.B. ein MAC der eine digitale Signatur), die zumindest über die Gruppenkennung ausgeführt wird, für alle Gehäuse der Gruppe (wie durch die Gruppenkennung identifiziert) der gleiche (z.B. symmetrische) Schlüssel verwendet. Dementsprechend muss dieser Schlüssel (oder ein zu diesem korrespondierender Schlüssel z.B. bei einem asymmetrischen Schlüsselpaar) dann in allen Gehäusen der Gruppe hinterlegt sein, um eine Integritätsprüfung zumindest der in der Berechtigungsinformation enthaltenen Gruppenkennung zu ermöglichen. Damit ist die gleiche Berechtigungsinformation für mehrere Gehäuse verwendbar. Durch eine entsprechende Aufnahme einer weiteren Berechtigungskenngröße, die angibt, welche der Türen des Gehäuses geöffnet werden dürfen (beispielsweise nur der Pakettür(en)), wird aus der allgemeinen Berechtigungsinformation dann beispielsweise die erste Berechtigungsinformation.

Die erste Berechtigungsinformation, die zur jeweiligen Entriegelung zumindest einer Tür von mehreren Gehäusen berechtigt, kann anstelle der Speicherung auf einem RFID- oder NFC-Tag eines Zustellers auch in einem tragbaren elektronischen Gerät des Zustellers, beispielsweise einem Handscanner, gespeichert sein.

Gemäß einer beispielhaften Ausführungsform des erfindungsgemäßen Verfahrens berechtigt die erste Berechtigungsinformation zur Entriegelung von jeweils ein oder mehreren Türen nur eines Gehäuses, und die erste Berechtigungsinformation ist zusammen mit weiterer erster Berechtigungsinformation, die zur Entriegelung von jeweils ein oder mehreren Türen von ein oder mehreren weiteren Gehäusen berechtigt, auf einer tragbaren elektronischen Vorrichtung gespeichert, insbesondere auf einem RFID- oder NFC-Tag oder auf einem Handscanner. Dadurch wird es dem Zusteller auf seiner Zustellroute abgenommen, für jedes Gehäuse ein gesondertes tragbares elektronisches Gerät mit der jeweiligen ersten Berechtigungsinformation mitführen zu müssen.

Wenn die erste Berechtigungsinformation als Berechtigungskenngröße beispielsweise jeweils eine Gehäusekennung aufweist, die zu den in den jeweiligen Gehäusen gespeicherten Gehäusekennungen korrespondiert, wird dadurch eine Individualisierung der ersten Berechtigungsinformation hinsichtlich verschiedener Gehäuse erzielt. Zusätzlich oder alternativ kann bei der kryptographischen Operation (z.B. einem MAC oder einer digitalen Signatur), deren Ergebnis Teil der Berechtigungsinformation ist, ein für jedes Gehäuse unterschiedlicher Schlüssel (entweder ein symmetrischer Schlüssel, der dann im Gehäuse identisch gespeichert ist, oder ein Schlüssel eines asymmetrischen Schlüsselpaars, von dem dann ein Schlüssel im Gehäuse gespeichert ist) verwendet werden, was die Robustheit des Systems bei Ausspähung des Schlüssels eines Gehäuses erhöht. Die jeweiligen ersten Berechtigungsinformationen für die mehreren Gehäuse können beispielsweise täglich auf die tragbare elektronische Vorrichtung überspielt werden.

Ein Nutzer (z.B. ein Zusteller) der tragbaren elektronischen Vorrichtung (z.B. des Handscanners) kann beispielsweise bei der Auswahl der zu einem Gehäuse korrespondierenden ersten Berechtigungsinformation aus den auf dem elektronischen Gerät gespeicherten ersten Berechtigungsinformationen unterstützt werden, in dem die Auswahl für den Nutzer eingegrenzt wird. Dies kann beispielsweise dadurch geschehen, dass die Auswahl auf diejenigen in dem Gerät gespeicherten ersten Berechtigungsinformationen eingegrenzt wird, die zu Gehäusen in einer definierten Umgebung des aktuellen Standorts des Nutzers gehören. Alternativ können im Handscanner gespeicherte Informationen zu Sendungen, die in das Gehäuse eingestellt oder aus diesem abgeholt werden sollen, dazu dienen, die Auswahlmenge der ersten Berechtigungsinformation automatisch zu reduzieren, z.B. durch Abgleich einer Zieladresse (die beispielsweise auch durch einen Code repräsentiert sein kann) der Sendung mit Adressen der den ersten Berechtigungsinformationen zugeordneten Gehäusen (wobei diese Adressen beispielsweise ebenfalls durch Codes repräsentiert sein können). Beispielsweise kann mit der tragbaren elektronischen Vorrichtung eine die Sendung identifizierente Information (z.B. ein Identcode) von einer zuzustellenden Sendung (z.B. einem Paket) erfasst werden, beispielsweise optisch (z.B. durch Einscannen eines auf der Sendung angebrachten Barcodes) oder durch Funksignale (z.B. durch Auslesen eines in, an oder auf der Sendung angeordneten Transponders oder Chips). Anhand dieser Informationen kann dann in der elektronischen Vorrichtung ein zugehöriger Datensatz zu dieser Sendung ermittelt werden, der beispielsweise eine Repräsentation der Adresse (z.B. die Adresse selbst, oder ein Code dafür) enthält, an die diese Sendung zuzustellen ist. Die Repräsentation der Adresse kann dann mit einer ebenfalls in der tragbaren elektronischen Vorrichtung gespeicherten Liste von Repräsentationen von Adressen (z.B. die Adresse selbst, oder ein Code dafür) von Gehäusen und/oder von den Gehäusen jeweils zugeordneten Nutzern insbesondere automatisch abgeglichen werden, um das Gehäuse zu identifizieren, für das die Sendung bestimmt ist. Die erste Berechtigungsinformation des so identifizierten Gehäuses kann dann beispielsweise automatisch an das Gehäuse übermittelt werden. Alternativ kann das identifizierte Gehäuse dem Nutzer auf einer graphischen Benutzerschnittstelle der tragbaren elektronischen Vorrichtung angezeigt werden und der Nutzer in einem Dialog gefragt werden, ob er die erste Berechtigungsinformation zu diesem Gehäuse übermitteln möchte. Die Übermittlung findet beispielsweise nur dann statt, wenn der Nutzer diesen Dialog durch eine Nutzeraktion (z.B. durch einen Tastendruck oder das Betätigen eines graphischen Elements der graphischen Benutzerschnittstelle) bestätigt. Wenn keine vollkommene Übereinstimmung zwischen der Repräsentation der Adresse der Sendung und einer Repräsentation der Adresse eines Gehäuses oder eines einem Gehäuse zugeordneten Nutzers aus der Liste festgestellt werden kann, können dem Nutzer beispielsweise diejenigen Gehäuse zur Auswahl angezeigt werden, deren Repräsentation der Adresse zumindest teilweise mit der Repräsentation der Adresse der Sendung übereinstimmt. Wenn die Repräsentation der Adresse der Sendung beispielsweise "Hauptstr. 4, 40211 Düsseldorf" lautet, es aber in der Liste von Repräsentationen von Adressen der Gehäuse nur "Hauptstr. 7a, 40211 Düsseldorf" und "Hauptstr. 7b, 40211 Düsseldorf" gibt, werden dem Nutzer die diesen beiden Repräsentationen von Adressen zugeordneten Gehäuse angezeigt, so dass er auswählen kann, welche jeweilige erste Berechtigungsinformation an das Gehäuse übermittelt werden soll.

Gemäß einer beispielhaften Ausführungsform des erfindungsgemäßen Verfahrens weist die erste Berechtigungsinformation eine zeitlich beschränkte Gültigkeit auf und/oder wird nach einer vordefinierten Anzahl von Verwendungen beim Nachweis der Berechtigung ungültig.

Zumindest die erste Berechtigungsinformation kann also beispielsweise eine zeitlich beschränkte Gültigkeit aufweisen, kann also beispielsweise nach Ablauf einer vordefinierten Zeitspanne (z.B. gerechnet ab ihrer Ausgabe oder ihrer Speicherung in einem Datenträger), die beispielsweise einige Minuten, Stunden, Tage, Wochen oder Monate betragen kann, oder ab einem vordefinierten Gültigkeitsendzeitpunkt nicht mehr zur Entriegelung von Türen des Gehäuses berechtigen. Damit ein Zusteller nach Ablauf dieser Zeitspanne seine Berechtigung zur Entriegelung von ein oder mehreren Türen des Gehäuses wieder nachweisen kann, ist der Erhalt neuer erster Berechtigungsinformation erforderlich. Entsprechend muss dann gegebenenfalls auch im Gehäuse die erste Berechtigungsinformation (oder die dazu korrespondierende, bei der Prüfung der ersten Berechtigungsinformation verwendete Information) aktualisiert werden. Dies kann beispielsweise dadurch geschehen, dass aktualisierte erste Berechtigungsinformation über eine Schnittstelle (z.B. über die Empfangseinheit des Gehäuses) eingespeichert wird, oder nach einem vordefinierten Algorithmus (beispielsweise in einem Prozessor des Gehäuses) neu bestimmt wird. Der vordefinierte Algorithmus korrespondiert dabei zu dem Algorithmus, nach dem auch die neue erste Berechtigungsinformation für den Zusteller bestimmt wird. Der Algorithmus kann beispielsweise geheim sein. Der Algorithmus kann u.a. beispielsweise zeitliche Information, wie beispielsweise ein Datum und/oder eine Uhrzeit, mit in die erste Berechtigungsinformation einbetten oder bei der Bestimmung der ersten Berechtigungsinformation verwenden. Zusätzlich oder alternativ kann die erste Berechtigungsinformation auch nach einer vordefinierten Anzahl von Verwendungen zum Nachweis der Berechtigung ungültig werden, z.B. nach einmaliger Verwendung, oder nach zehn oder zwanzig Verwendungen, um nur ein paar Beispiele zu nennen. Dann kann es für den Zusteller ebenfalls erforderlich sein, neue erste Berechtigungsinformation zu erhalten, und es kann ebenfalls erforderlich sein, die erste Berechtigungsinformation oder die dazu korrespondierende, bei der Prüfung der ersten Berechtigungsinformation verwendete Information im Gehäuse, entsprechend zu aktualisieren. Die Berechtigungsinformation kann beispielsweise dadurch in der Gültigkeit beschränkt sein, dass sie Berechtigungskenngrößen enthält, die diese Beschränkung der Gültigkeit repräsentieren und im Gehäuse gegengeprüft werden, beispielsweise gegen eine aktuelle Uhrzeit, falls die Berechtigungsinformation als Berechtigungskenngröße einen Gültigkeitszeitraum enthält.

Gemäß einer beispielhaften Ausführungsform des erfindungsgemäßen Verfahrens wird zum Nachweis der Berechtigung die erste Berechtigungsinformation eingesetzt.

Das Verfahren kann dann ferner ein Verfahren zum Entriegeln von ein oder mehreren Türen des Gehäuses und zur Verwendung des Gehäuses sein und folgendes umfassen:
- Einstellen von ein oder mehreren Sendungen in die der einen entriegelten Tür oder der der ersten Gruppe von entriegelten Türen jeweils zugeordneten Gehäuseöffnung(en) und/oder Abholen von ein oder mehreren Sendungen, insbesondere Paketen, aus der/den der einen entriegelten Tür oder der der ersten Gruppe von entriegelten Türen jeweils zugeordneten Gehäuseöffnung(en), und
- Schließen der entriegelten Tür oder der ersten Gruppe von entriegelten Türen.

Das Einstellen/Abholen und das Schließen werden dann beispielsweise von der Person ausgeführt, insbesondere von einem Zusteller oder einer Gruppe von Zustellern. Die Person verfügt dann beispielsweise nur über die erste Benutzerinformation, aber nicht über die zweite Benutzerinformation.

Dabei kann die entriegelte Tür oder die erste Gruppe von entriegelten Türen durch das Schließen automatisch verriegelt werden, beispielsweise durch Ausbildung der Verriegelungselementmodule als Schnappverschlüsse wie bereits oben beschrieben.

Gemäß einer beispielhaften Ausführungsform des erfindungsgemäßen Verfahrens wird zum Nachweis der Berechtigung die zweite Berechtigungsinformation eingesetzt.

Das Verfahren kann dann ferner ein Verfahren zum Entriegeln von ein oder mehreren Türen des Gehäuses und zur Verwendung des Gehäuses sein und folgendes umfassen:
- Entnehmen von ein oder mehreren zugestellten Sendungen, insbesondere Paketen, aus der/den Gehäuseöffnungen (4), die der entriegelten Tür (6) oder der erste Gruppe von entriegelten Türen (6) zugeordnet ist/sind, oder Einstellen von ein oder mehreren abzuholenden Sendungen, insbesondere Paketen, in die Gehäuseöffnung (4), die der entriegelten Tür (6) oder der ersten Gruppe von entriegelten Türen (6) zugeordnet ist/sind,
- Entnehmen von ein oder mehreren zugestellten Sendungen, insbesondere Briefen, aus der/den Gehäuseöffnungen (5), die der/den restlichen entriegelten Türen (7) zugeordnet ist/sind, und
- Schließen der entriegelten Türen.

Das Entnehmen/Einstellen und das Schließen wird dann beispielsweise von der Person ausgeführt, insbesondere von der dem Gehäuse zugeordneten Person, also insbesondere einem Besitzer des Gehäuses. Die Person verfügt dann beispielsweise nur über die zweite Benutzerinformation, aber nicht über die erste Benutzerinformation.

Dabei können die entriegelten Türen durch das Schließen automatisch verriegelt werden, beispielsweise durch Ausbildung der Verriegelungselementmodule als Schnappverschlüsse wie bereits oben beschrieben.

Die zuletzt genannten beiden Ausführungsformen des erfindungsgemäßen Verfahrens sollen auch als kombiniertes Verfahren offenbart verstanden werden, bei dem eine Person zum Nachweis ihrer Berechtigung die erste Berechtigungsinformation verwendet und dann die jeweiligen Verfahrensschritte ausführt, und eine weitere Person zum Nachweis ihrer Berechtigung die zweite Berechtigungsinformation verwendet und dann die jeweiligen Verfahrensschritte ausführt.

Die oben beschriebenen Ausführungsbeispiele und beispielhaften Ausgestaltungen der vorliegenden Erfindung sollen auch in allen Kombinationen miteinander offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine Ansicht einer beispielhaften Ausführungsform eines erfindungsgemäßen Paketbriefkastens mit einer beispielhaften Ausführungsform der erfindungsgemäß vorgeschlagenen Verriegelungseinheit in einer Teilschnittdarstellung;
- Fig. 2: eine dreidimensionale Ansicht eines Verriegelungselementmoduls für die erste Tür des Paketbriefkastens gemäß Fig.1;
- Fig. 3: eine Schnittzeichnung durch das Verriegelungselementmodul gemäß Fig. 2;
- Fig. 4: eine dreidimensionale Ansicht eines Verriegelungselementmoduls für die zweite Tür des Paketbriefkastens gemäß Fig. 1;
- Fig. 5: eine Seitenansicht des Verriegelungselementmoduls gemäß Fig. 4;
- Fig. 6: eine Schnittzeichnung durch das Verriegelungselementmodul gemäß Fig. 4;
- Fig. 7: eine Explosionsdarstellung der Verriegelungselementmodule gemäß Fig. 2 und Fig. 4 vor ihrer Montage;
- Fig. 8: einen Montageträger zur Montage der Verbindungselementmodule;
- Fig. 9: auf dem Montageträger gemäß Fig. 8 montierte Verriegelungselementmodule gemäß Fig. 2 und Fig. 4 in dreidimensionaler Ansicht;
- Fig. 10: ein Blockschaltbild der elektronischen Komponenten einer beispielhaften Ausführungsform eines erfindungsgemäßen Paketbriefkastens;
- Fig. 11: ein Flussdiagramm eines beispielhaften Verfahrens zur Steuerung der Entriegelung von ein oder mehreren Türen eines erfindungsgemäßen Paketbriefkastens;
- Fig. 12: ein Flussdiagramm einer beispielhaften Ausführungsform des erfindungsgemäßen Verfahrens zur Entriegelung von ein oder mehreren Türen des erfindungsgemäßen Paketbriefkastens, durchgeführt durch einen Zusteller; und
- Fig. 13: ein Flussdiagramm einer weiteren beispielhaften Ausführungsform des erfindungsgemäßen Verfahrens zur Entriegelung von ein oder mehreren Türen des erfindungsgemäßen Paketbriefkastens, durchgeführt durch einen Besitzer des Paketbriefkastens.

Anhand der Zeichnung wird die erfindungsgemäße Verriegelungseinheit 1 nachfolgend anhand einer besonders bevorzugten Verwendung in einem Paketbriefkasten 2 zur Aufnahme von zuzustellenden Briefen und Paketen mit einem Gehäuse 3 mit einer ersten Gehäuseöffnung 4 in ein erstes Aufnahmefach für Pakete und mit einer zweiten Gehäuseöffnung 5 in ein zweites Aufnahmefach für Briefe beschrieben.

Es wird jedoch darauf hingewiesen, dass es sich bei dem erfindungsgemäß mit der vorgeschlagenen Verriegelungseinheit 1 versehenen Paketbriefkasten 2 zwar um eine besonders bevorzugte Ausführungsform der vorliegenden Erfindung handelt. Diese ist jedoch nicht auf die Verwendung in Paketbriefkästen beschränkt, sondern bezieht sich allgemein auf Gehäuse 3, insbesondere Aufnahmebehälter von Gegenständen, mit mindestens zwei mittels jeweils einer ersten bzw. zweiten Tür 6, 7 verriegelbaren Gehäuseöffnungen 4, 5. Es können jedoch auch mehr Gehäuseöffnungen 4, 5 sowie erste und zweite Türen 6, 7 vorgesehen sein, wobei die Türen 6, 7 dann einer ersten Gruppe von Türen und einer zweiten Gruppe von Türen 7 angehören. Dabei müssen nicht alle an dem Paketkasten oder Gehäuse vorhandenen Türen der erfindungsgemäßen Verriegelungseinheit 1 zugeordnet sein; ein oder mehrere Türen können auch durch separate Verriegelungseinheiten ver- und entriegelbar sein. Für die Verwirklichung der erfindungsgemäßen Lehre reicht es aus, wenn lediglich zwei Türen der erfindungsgemäßen Verriegelungseinheit 1 zugeordnet sind.

In dem gemäß der bevorzugten Ausführungsform beschriebenen Paketbriefkasten 2 weist die zweite Tür 7 einen Schlitz 8 zum Einwurf von Briefen ohne Öffnen der zweiten Tür 7 des zweiten Aufnahmefachs auf. Der Schlitz kann beispielsweise mit einer nach außen oder innen offenbaren Klappe versehen sein (nicht dargestellt), die nicht verschlossen ist. Beide Türen 6, 7 sind mittels der erfindungsgemäßen Verriegelungseinheit 1 verriegelbar.

Die Verriegelungseinheit 1 weist jeweils ein Verriegelungselementmodul 9,10 mit mindestens einem in dem dargestellten Beispiel als Schließhaken ausgebildeten Verriegelungskörper 11 für jede Tür 6, 7 und mit einem Verriegelungsantrieb 12 zum Betätigen des mindestens einen Verriegelungskörpers 11 bzw. der mehreren Verriegelungskörper 11 auf.

In dem dargestellten Ausführungsbeispielen weist das Verriegelungselementmodul 9 für die erste Tür 6 zwei Verriegelungskörper 11 und das Verriegelungselementmodul 10 für die zweite Tür 7 lediglich einen Verriegelungskörper 11 auf. Ebenso gut kann das Verriegelungselementmodul für die erste Tür 6 natürlich auch mehr als einen Verriegelungskörper 11 aufweisen. Der Verriegelungsantrieb 12 für jedes der beiden Verriegelungselementmodule 9, 10 weist ein gemeinsames Antriebselement 13 auf, das als drehbare Achse in Form einer Stange ausgebildet ist. Die Stange 13 als gemeinsames Antriebselement ist um einen Verstellweg bewegbar (drehbar) ausgebildet.

In einer ersten Verstellposition bringt die Stange 13 lediglich den Verriegelungskörper 11 für die erste Tür 6 in eine Entriegelungsstellung. In der zweiten Verstellposition, die durch ein Weiterdrehen der Stange 13 als gemeinsames Antriebselement erreicht wird, werden die Verriegelungskörper 11 für alle Türen 6, 7 in eine Entriegelungsstellung gebracht. Für das gemeinsame Antriebselement 13 der Verriegelungsantriebe 12 der jeweiligen Verriegelungselementmodule 9,10 ist ein elektromotorischer Antrieb 14 vorgesehen, der mittels einer Kopplung 15 mit dem gemeinsamen Antriebselement 13 (Stange) in Wirkverbindung so gekoppelt ist, dass der elektromotorische Antrieb 14 die Stange 13 (drehbare Achse als gemeinsames Antriebselement) zwischen den verschiedenen Verstellpositionen bewegen kann.

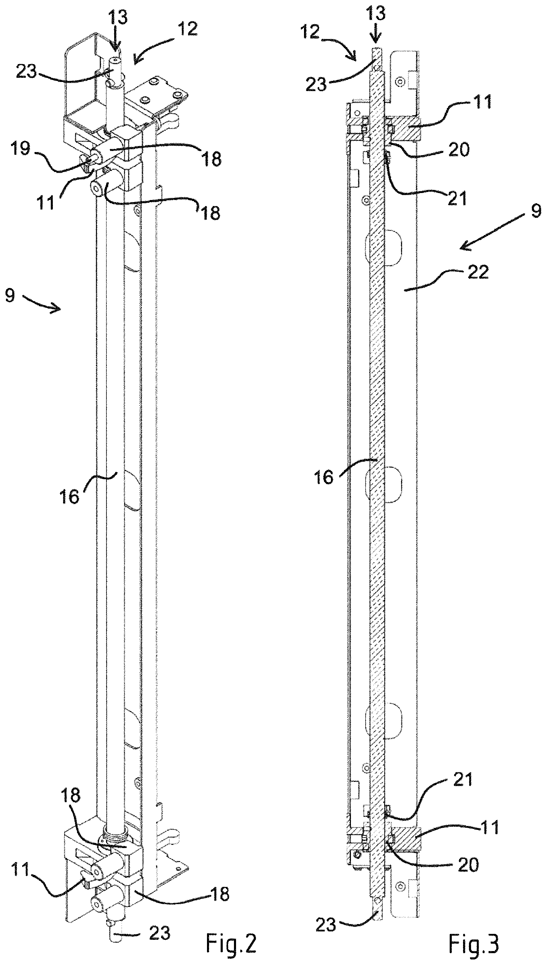

Nachfolgend wird mit Bezug auf die Fig. 2 bis 9 der Aufbau der erfindungsgemäßen Verriegelungseinheit anhand des Beispiels des Paketbriefkastens 2 mit zwei Türen 6, 7 näher beschrieben. Die beschriebenen und/oder dargestellten Merkmale lassen sich, wie für den Fachmann ohne weiteres ersichtlich, auch auf andere Gehäuse 3 mit ggf. mehr als zwei Gehäuseöffnungen 4, 5 übertragen, indem die einzelnen Verriegelungselementmodule 9, 10 in entsprechend größerer Zahl miteinander kombiniert bzw. gekoppelt werden.

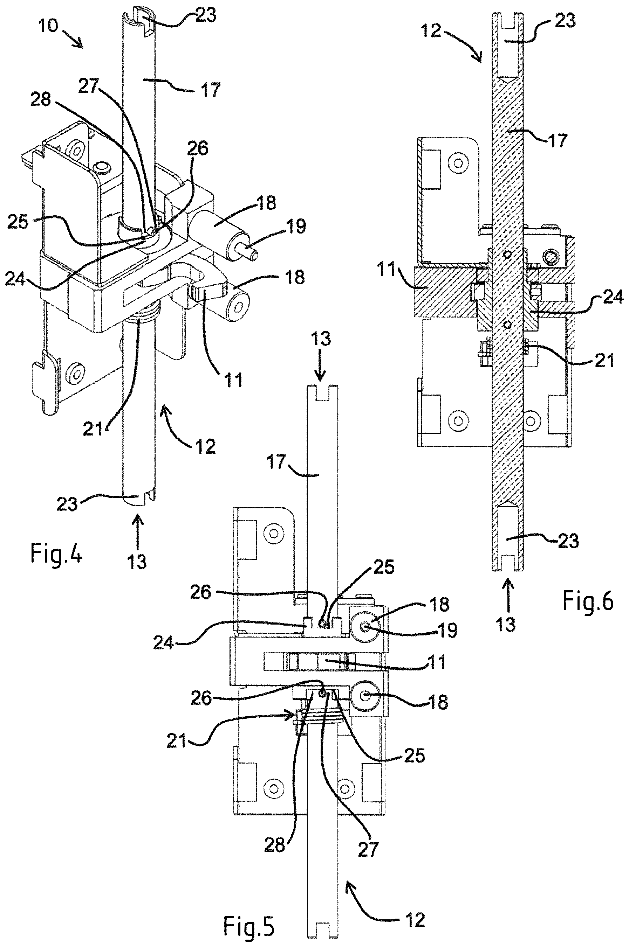

Das in Fig. 2 dargestellte Verriegelungselementmodul 9 für die erste Tür 6 weist als Verriegelungsantrieb 12 ein erstes Stangenteil 16 auf, das mit einem zweiten Stangenteil 17 des in Fig. 4 dargestellten Verriegelungselementmoduls 10 verbunden wird, um das gemeinsame Antriebselement 13 der Verriegelungseinheit 1 zu bilden.

An dem ersten Stangenteil 16 sind zwei als Schließhaken ausgebildete Verriegelungskörper 11 angeordnet, indem diese Verriegelungskörper 11 (Schließhaken) unbeweglich, d.h. fix und gegenüber dem ersten Stangenteil 16 unverdrehbar, an dem ersten Stangenteil 16 festgelegt sind. Das erste Stangenteil 16 bildet also den Verriegelungsantrieb 12 des ersten Verriegelungselementmoduls 9 für die erste Tür 6, indem durch Verdrehen des Stangenteils 16 der Schließhaken 11 unmittelbar mitgedreht wird, und zwar aus der in Fig. 2 dargestellten Schließposition in eine Freigabeposition, in welcher der Schließhaken 11 ein nicht dargestelltes Riegelelement der ersten Tür 6 freigibt, so dass die Tür 6 geöffnet werden kann.

Um die erste Tür 6 automatisch zu öffnen, wenn der Schließhaken 11 das Riegelelement der ersten Tür freigibt, sind in axialer Richtung jeweils oberhalb und unterhalb des Schließhakens Führungshalterungen 18 zur Aufnahme eines mittels einer Druckfeder oder dergleichen vorgespannten Auswerfstößels 19 vorgesehen. Wie in Fig. 2 dargestellt, ist ein Auswerfstößel 19 in der Regel ausreichend, um die Tür nach Freigabe der Verriegelung automatisch zu öffnen.

An dem Auswerfstößel 19 kann ein Öffnungssensor, bspw. ein mit einem Magnetsensor zusammenwirkender Permanentmagnet, angeordnet sein, um einen Offenzustand der Tür zu detektieren. Dies kann bspw. für eine Logbuchfunktion einer Steuerung in den elektromotorischen Antrieb 14 verwendet werden, welche das Öffnen und Schlie-ßen der Türen 6, 7 des Gehäuses 3 in einem Logbuch aufzeichnet. Ein solches Logbuch kann durch den Nutzer abgerufen und überprüft werden.

Der Schnittzeichnung gemäß Fig. 3 ist zu entnehmen, dass die als Schließhaken ausgebildeten Verriegelungskörper 11 über eine Montagehülse 20 mit dem ersten Stangenteil 16 des ersten Verriegelungselementmoduls 9 verbunden sind, so dass die Montagehülse 20 und der Verriegelungskörper 11 nicht gegenüber der durch das erste Stangenteil 16 gebildeten Achse (als Teil des gemeinsamen Antriebselements 13) verdreht werden können. Die Kräfte einer Drehung des ersten Stangenteils 16 werden also direkt auf den Schließhaken (Verriegelungskörper 11) übertragen.

Daher wäre es grundsätzlich auch möglich, den Schließhaken 11 direkt, d.h. ohne das Vorsehen einer Montagehülse 20, mit dem ersten Stangenteil 16 zu verbinden. Die Verwendung der Montagehülse 20 hat erfindungsgemäß jedoch den Vorteil, dass durch Verwendung der Montagehülse 20 derselbe Verriegelungskörper 11 für das erste Verriegelungselementmodul 9 und das zweite Verriegelungselementmodul 10 verwendet werden kann, das später mit Bezug auf die Fig. 4 bis 6 noch detailliert beschrieben wird.

Das erste Verriegelungselementmodul 9 ist als Schnappverschluss ausgebildet. Dies bedeutet, dass die Verriegelungskörper 11 in Schließrichtung, d.h. in die in Fig. 2 dargestellte Schließpositionen, vorgespannt sind. Hierfür ist benachbart zu dem Verriegelungskörper 11 an dem ersten Stangenteil 16 eine Rückstellfeder 21 vorgesehen, welche mit einem Ende an dem ersten Stangenteil 16 und mit dem anderen Ende an einem Verriegelungselementmodulkörper 22 festgelegt ist, welcher die Elemente des ersten Verriegelungselementmoduls 9 trägt. Wenn das erste Stangenteil 16 aus der in Fig. 2 dargestellten Schließposition des Verriegelungskörpers 11 in eine Verstellposition gedreht wird, in welcher der Verriegelungskörper 11 ein nicht dargestelltes Riegelelement der ersten Tür 6 freigibt, wird die Rückstellfeder 21 weiter gespannt, so dass das Stangenteil 16, wenn es von dem elektromotorischen Antrieb 14 nicht mehr in der Freigabe-Verstellposition gehalten wird, zurückdreht, bis der Verriegelungskörper 11 in der in Fig. 2 dargestellten Schließposition ist.

Wenn nun eine geöffnete Tür 6 geschlossen wird, wird der Schließkörper 11 durch das an der Tür 6 vorhandene Riegelelement aus der Schließposition gedrückt, indem das Stangenteil 16 entgegen der Kraft der Rückstellfeder 21 verdreht wird. Sobald sich die Tür 6 in der Geschlossen-Position befindet, kann der als Verriegelungskörper 11 ausgebildete Schließhaken das Riegelelement der Tür 6 umschließen, so dass das Stangenteil 16 aufgrund der Rückstellkraft der Rückstellfeder 21 in die Schließposition zurückgestellt wird und das Riegelelement der Tür 6 in die Hakenöffnung des Schließhakens 11 eingreift. Dies wird als Schnappverschluss bezeichnet.

Das in den Fig. 4 bis 6 im Detail dargestellte zweite Verriegelungselementmodul 10 für die zweite Tür 7 weist ein zweites Stangenteil 17 auf, das über eine Kopplung 23 (auch als Koppelstücke bezeichnet) mit dem ersten Stangenteil 16 gekoppelt werden kann. Dazu sind Elemente der Kopplung 23 sowohl an dem ersten Stangenteil 16 als auch an dem zweiten Stangenteil 17 ausgebildet, die bei Verbindung der beiden Stangenteile 16, 17 formschlüssig ineinandergreifen und die Drehbewegung eines Stangenteils 16, 17 unmittelbar auf das andere Stangenteil 16, 17 übertragen. In zu dem Verriegelungselementmodul 9 für die erste Tür 6 analoger Weise weist auch das Verriegelungselementmodul 10 für die zweite Tür 7 einen als Schließhaken ausgebildeten Verriegelungskörper 11 auf, der durch Verdrehen des zweiten Stangenteils 17 zwischen einer in Fig. 4 dargestellten Schließposition und einer Entriegelungs- oder Freigabeposition verstellt werden kann, in welcher der Schließhaken 11 ein nicht dargestelltes Riegelelement der zweiten Tür 7 freigibt.

In der entriegelten Position wird die zweite Tür 7 von einem Auswerfstößel 19 automatisch geöffnet, der in einer Führungshalterung 18 vorgesehen ist. Wie auch bei dem ersten Verriegelungselementmodul 9 befinden sich zwei Führungshalterungen 18 in axialer Richtung auf beiden Seiten des Verriegelungskörpers 11, wobei ein Auswerfstößel 19 nur in einer der beiden Führungshalterungen vorgesehen werden muss, um die zweite Tür 7 nach der Entriegelung zuverlässig zu öffnen.

Anders als bei dem ersten Verriegelungselementmodul 9 ist der Verriegelungskörper 11 des zweiten Verriegelungselementmoduls 10 um die durch das zweite Stangenelement 17 im Bereich des zweiten Verriegelungselementmoduls 10 gebildete drehbare Achse 13 mit einem definierten Spiel verdrehbar gelagert. Dies hat zur Folge, dass ein an dem zweiten Stangenteil 17 verdrehbar gelagerter Verriegelungskörper 11 nur mitbewegt wird, wenn das Spiel in dem Verstellweg des gemeinsamen Antriebselements 13, respektive des zweiten Stangenteils 17, überschritten ist. Erst dann beginnt die Drehbewegung des Verriegelungskörpers 11, durch welche der Schließhaken (Verriegelungskörper 11) außer Eingriff mit dem Riegelelement der zweiten Tür 7 gebracht wird. Erst dann erfolgt also das Öffnen der zweiten Tür 7 und damit die Freigabe der zweiten Gehäuseöffnung in das Aufnahmefach für Briefe.

Für das Vorsehen des Spiels ist der Verriegelungskörper 11 des zweiten Verriegelungselementmoduls 10 über eine Lagerhülse verdrehbar auf dem zweiten Stangenteil 17 gelagert. Dazu weist die Lagerhülse 24 eine Ausnehmung 25 auf, welche auf der durch das Stangenteil 17 gebildeten, auch selbst drehbaren Achse 13 beweglich geführt ist. Dazu greift ein auf der Achse 13 radial vorstehender Bolzen 26 in die Ausnehmung 25 der Lagerhülse 24 ein. Dadurch wird das Spiel zum Verdrehen der La-Lagerhülse 24 auf der Achse 25 definiert, weil sich der Bolzen 26 in der Ausnehmung 25 soweit drehen kann, bis er den Rand der Ausnehmung 25 erreicht, bevor die Lagerhülse 24 bei einer Bewegung des Stangenteils 17 mitgedreht wird. Der Schließhaken 11 ist fix mit der Lagerhülse 24 verbunden.

Wie der Seitenansicht des Verriegelungselementmoduls 10 für die zweite Tür 7 gemäß Fig. 5 zu entnehmen, weist die Lagerhülse 24 zwei Ausnehmungen 25 an den gegenüberliegenden axialen Enden der Lagerhülse 24 auf, in die jeweils ein auf der durch das zweite Stangenteil 17 gebildeten drehbaren Achse 13 radial vorstehender Bolzen 26 eingreift. Dies bewirkt, dass die Lagerhülse 24 durch die beiden in die Ausnehmungen 25 eingreifenden Bolzen 26 axial fixiert ist und durch die Ausnehmung 25, in welche die Bolzen 26 aufgenommen sind, das Spiel zum Verdrehen der Lagerhülse 24 um die Achse 13 vorgegeben ist.

In der in den Fig. 4 und Fig. 5 dargestellten Schließstellung, in welcher sich der Schließhaken 11 in der Schließposition befindet, sind die Bolzen 26 in einem mittleren Bereich der das Spiel für das Verdrehen der Lagerhülse 24 auf der Achse definierenden Ausnehmung 25 aufgenommen. Damit ergeben sich zwei Spielbereiche 27, 28 in der Ausnehmung 25 für jede Drehrichtung der Achse 13 respektive des zweiten Stangenteils 17. Der erste Spielbereich 27 bewirkt, dass das erste Stangenteil 17 zunächst in Richtung einer Öffnungsbewegung gedreht werden kann, ohne dass der Verriegelungskörper 11 aus seiner Schließposition in welche er das Riegelelement der zweiten Tür 7 freigibt, weg gedreht wird. Andererseits wird, wie bereits erläutert, bei der Drehbewegung der drehbaren Achse 13 als gemeinsames Antriebselement der Verriegelungskörper des ersten Stangenteils 16 in dem ersten Verriegelungselementmodul 9 bereits in eine Entriegelungsposition überführt, so dass die erste Tür 6 bereits öffnet. Durch den ersten Spielbereich 27 in der Ausnehmung 25 wird also bewirkt, dass die zweite Tür 7 erst nach der ersten Tür 6 öffnet.

Wird also die drehbare Achse 13 als gemeinsames Antriebselement nur in eine erste Verstellposition verbracht, in der der radial vorstehende Bolzen 26 in der Ausnehmung 25 nur den ersten Spielbereich 27 ausnutzt, ohne gegen den Rand der Ausnehmung 27 zu stoßen und die Lagerhülse 24 mit zu bewegen, wird nur die erste Tür 6 geöffnet und die zweite Tür 7 bleibt verschlossen. Durch eine entsprechend gesteuerte Drehbewegung der drehbaren Achse 17 kann also gezielt nur die erste Tür 6 zur Öffnung freigegeben werden.

Erst wenn die drehbare Achse 13 in eine zweite Verstellposition weitergedreht wird, nimmt der radial vorstehende Bolzen 26 in Anlage an den Rand der Ausnehmung 25 die Lagerhülse 24, und damit den Schließhaken 11, mit, um auch die zweite Tür 7 zu entriegeln.

Ist dagegen die zweite Tür 7 geöffnet und befindet sich die drehbare Achse 13, respektive das zweite Stangenteil 17, in der in den Fig. 4 und 5 gezeigten Schließposition, wird der Schließkörper 11 beim Zudrücken der Tür in ihre verriegelte Position aus der in den Fig. 4 und 5 dargestellten Schließposition herausgedrückt, indem das Riegelelement der Tür an dem Schließkörper 11 anstößt. Dabei wird die Lagerhülse 24 auf der drehbaren Achse 13, respektive dem zweiten Stangenteil 17, verdreht, bis sich die zweite Tür 7 in ihrer Geschlossen-Stellung befindet und das Riegelelement der zweiten Tür 7 von dem Schließhaken 11 umfasst werden kann. In dieser Position schnappt der Schließhaken 11, angetrieben durch die Rückstellfeder 21, analog zu dem zuvor beschriebenen Fall für das erste Verriegelungselementmodul 10 in die Schließstellung zurück.

Dafür ist der zweite Spielbereich 28 der Ausnehmung 25 vorgesehen, der eine Bewegung der Lagerhülse 27 (und des mit der Lagerhülse 27 fest verbundenen Schließkörpers 11) erlaubt, ohne dass der gemeinsame Antrieb 26 mitgedreht wird.

Wie der Schnittzeichnung gemäß Fig. 6 zu entnehmen, ist die Lagerhülse 24, abgesehen von den in der Ausnehmung 25 geführten Bolzen 26, auf dem zweiten Stangenteil 17 frei beweglich gelagert.

Für die Kopplung 23 des zweiten Stangenteils 17 an das erste Stangenteil 16 weist das zweite Stangenteil 17 eine axiale Bohrung mit einer radial verlaufenden Ausnehmung auf, in welche ein in Fig. 3 dargestellter Achsenkern mit radial verlaufendem Bolzen eingreift, so dass die ersten und zweiten Stangenteile 17 in Axialrichtung einfach ineinander gesteckt werden können und eine Drehung direkt aufeinander übertragen. Achskern und axiale Bohrung werden auch als Koppelstücke bezeichnet, die geeignet zusammenwirken, um die Kopplung 23 zu bewirken.

Die Koppelstücke der Kopplung 23 an dem ersten Stangenteil 16 und dem zweiten Stangenteil 17 sind über die horizontale Mittelachse symmetrisch ausgebildet, so dass eine Links-Rechts-Tauschbarkeit des ersten Verriegelungselementmoduls 9 und des zweiten Verriegelungselementmoduls 10 gegeben ist. Hierdurch kann das Modul einfach von einem Rechtsanschlag der Tür auf einen Linksanschlag der Tür bzw. umgekehrt durch eine Drehung um 180° getauscht werden.

Um diese Tauschbarkeit auch hinsichtlich des Angriffes der Verriegelungskörper 11 an den nicht dargestellten Riegelelementen der Türen 6, 7 zu erreichen, ist ferner vorgesehen, dass der eine bzw. die mehreren Verriegelungskörper 11 auf einem Stangenteil 16, 17 in axialer Richtung bezogen auf die horizontale Mittelachse des Stangenteils 16,17 spiegelsymmetrisch angeordnet sind. Das heißt, dass die Verriegelungskörper auf beiden Hälften des Stangeteils 16,17 bezogen auf die Mitte des Stangenteils 16, 17 symmetrisch angeordnet sind. Damit liegen die Verriegelungskörper 11 jeweils nach einer Drehung des Verriegelungselementmoduls 9, 10 um 180° axial in derselben Höhe, so dass sie entsprechend an den Riegelelementen der Türen 6, 7 angreifen zu können.

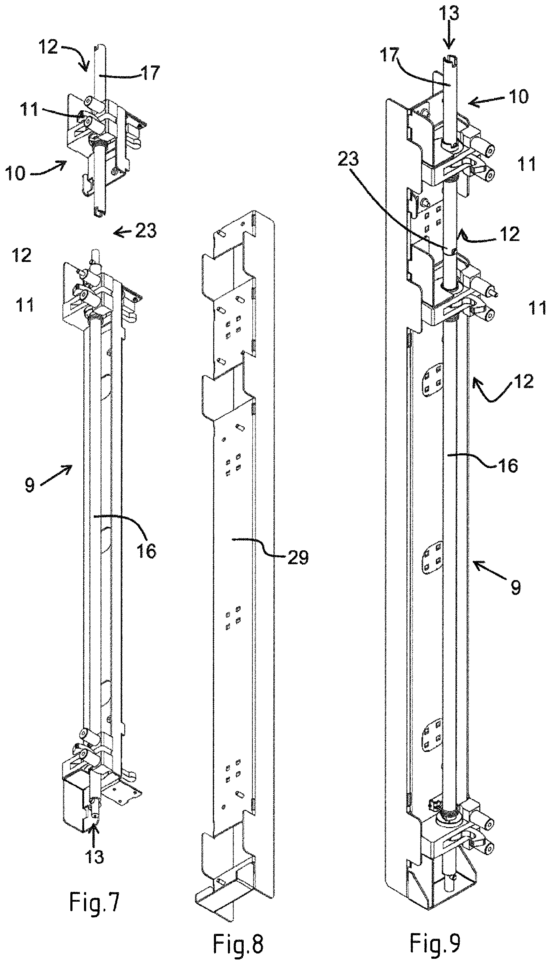

In Fig. 7 sind in einer Explosionsdarstellung das Verriegelungselementmodul 9 für die erste Tür und das Verriegelungselementmodul 10 für die zweite Tür 7 gezeigt, die zuvor mit Bezug auf die Fig. 2 bzw. Fig. 4 schon detailliert erläutert wurden. Die Verriegelungselementmodule 9,10 weisen entsprechend ein erstes Stangenteil 16 bzw. ein zweites Stangenteil 17 auf, die über die zuvor beschriebene Kopplung 23 in einander gesteckt werden können, so dass bei der Drehung eines Stangenteils 16,17 das andere Stangenteil 17, 16 mit dreht.

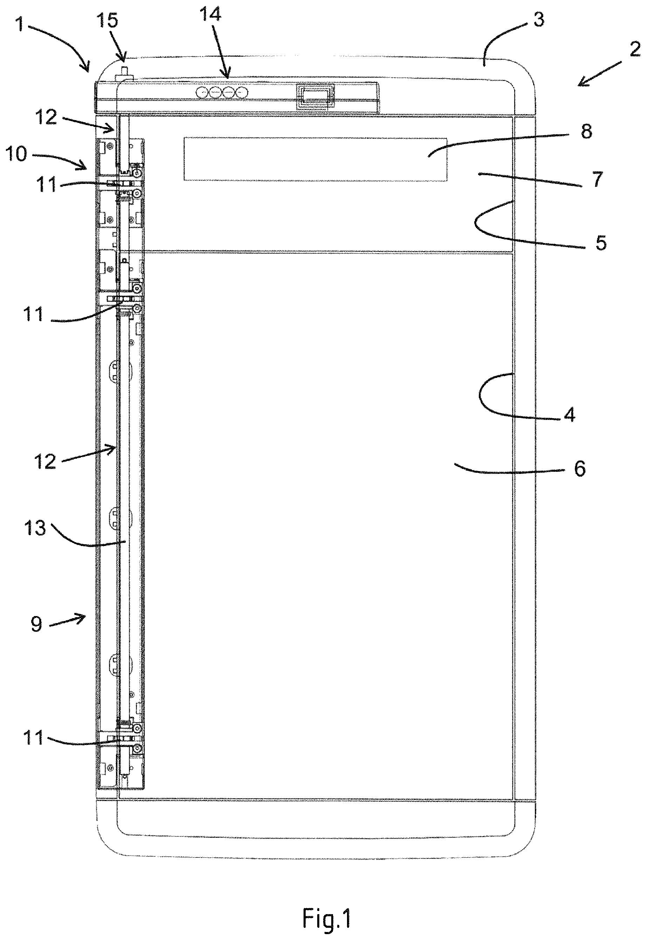

In Fig. 7 sind die beiden Elemente kurz vor dem Zusammenstecken dargestellt. Nach dem Zusammenstecken bilden das erste Stangenteil 16 und das zweite Stangenteil 17 zusammen das gemeinsame Antriebselement 13 (drehbare Achse), das über die Kopplung 15 mit dem elektromotorischen Antrieb 14 verbunden werden kann (vgl. Fig. 1). Der elektromotorische Antrieb 14 kann auch eine Steuerung mit Authentifizierungsfunktion enthalten, die je nach erfolgter Authentifizierung die Verstellung der drehbaren Achse 13 als gemeinsames Antriebselement derart vornimmt, dass entweder nur die erste Tür 6 (insbesondere des Paketfaches) oder gemeinsam die erste Tür 6 und die zweite Tür 7 (insbesondere des Paketfaches und des Briefkastens zusammen) geöffnet wird.

Um den Schnappverschluss wirksam zu gestalten, kann erfindungsgemäß vorgesehen sein, dass nach der Öffnung der Türen 6 und/oder 7, nachgewiesen bspw. durch einen entsprechenden Türöffnungssensor in Verbindung mit dem Auswerfstößel 19 für jede Tür 6, 7, die drehbare Achse 13 durch den elektromotorischen Antrieb 14 wieder in die Schließstellung zurückgedreht wird, in der die Verriegelungskörper 11 die in den Fig. 4 und 6 gezeigten Positionen aufweisen.

Nach dem Zusammenstecken der Verriegelungselementmodule 9, 10 können diese auf dem in Fig. 8 gezeigten Montageträger 29 in Form eines Montageblechs montiert werden, wobei für einen Rechts- bzw. Linksanschlag der Türen 6, 7 die Verriegelungselementmodule 9,10 in jeder der beiden möglichen, um 180° gedrehten Positionen angebracht werden können.

Fig. 9 zeigt den Montageträger 8 mit den darauf montierten Verriegelungselementmodulen 9, 10, deren erste und zweite Stangenteile 16, 17 zu dem gemeinsamen Antriebselement 13 (drehbare Achse) zusammengefügt sind.

Durch die vorgeschlagene Verriegelungseinheit 1 wird ein einfach handhabbarer Verriegelungsmechanismus für ein Gehäuse 3 mit Gehäuseöffnungen 4, 5, die jeweils durch Türen 6, 7 verschließbar und verriegelbar sind, vorgeschlagen, wobei eine erste Gruppe von Türen 6 separat geöffnet werden kann, indem ein gemeinsames Antriebselement 13 der Verriegelungseinheit 1 in eine erste Verstellposition gebracht wird. Bei dem Verbringen des gemeinsamen Antriebselements 13 in eine zweite Verstellposition werden dann beide Türen 6, 7 gemeinsam geöffnet. Diese Anwendung eignet sich besonders gut für einen Paketbriefkasten, bei dem ein Paketzusteller die erste Tür des Paketfaches unabhängig von der zweiten Tür des Brieffaches öffnen und schließen kann.

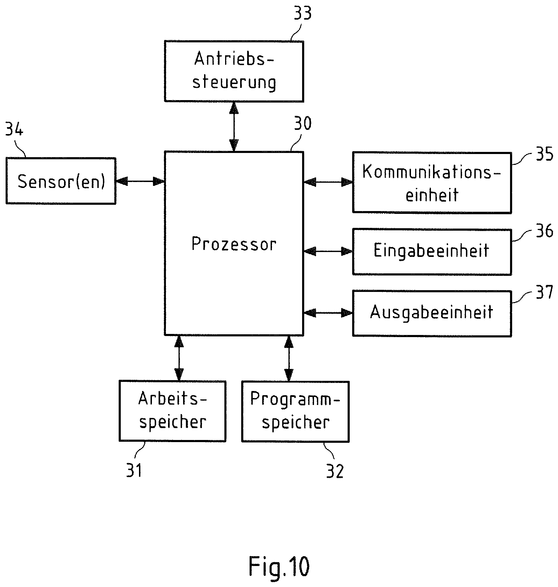

Fig. 10 ist ein Blockschaltbild der elektronischen Komponenten 30-37einer beispielhaften Ausführungsform des erfindungsgemäßen Paketbriefkastens 2, wie er beispielsweise in Fig. 1 dargestellt ist. Diese Komponenten können beispielsweise im Inneren des Paketbriefkastens 2, beispielsweise in der Nähe des Antriebs 14 (siehe Fig. 1) angeordnet sein.

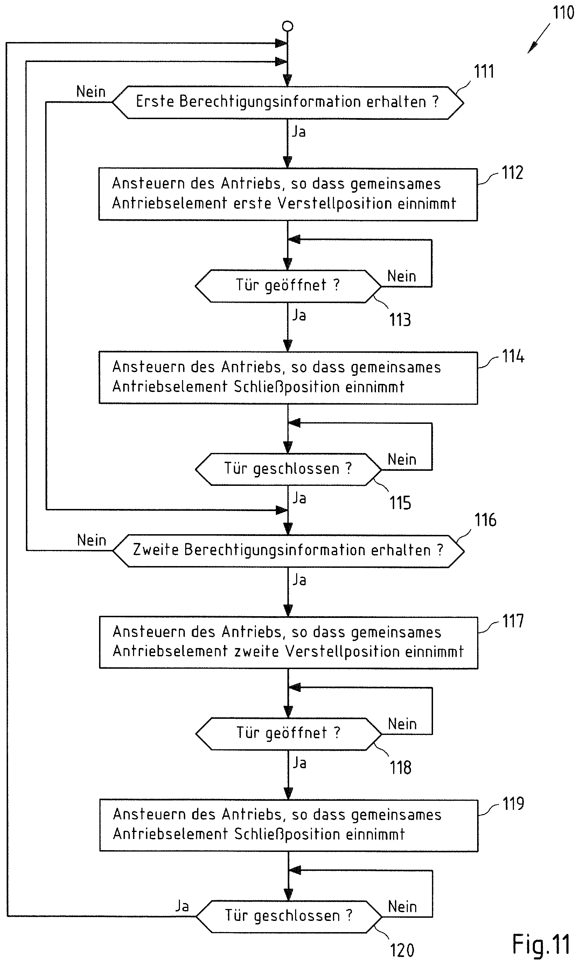

Vorgesehen ist ein Prozessor 30 mit zugeordnetem Arbeitsspeicher 31 und Programmspeicher 32. Der Prozessor führt beispielsweise Programmanweisungen aus, die im Programmspeicher 32 gespeichert sind, und beispielsweise zumindest teilweise das Verfahren gemäß Fig. 11 ausführen. Der Programmspeicher kann beispielsweise ein persistenter Speicher, wie beispielsweise ein Read-Only-Memory (ROM)-Speicher sein. Im Programmspeicher 32, oder in einem separaten (z.B. persistenten) Speicher kann auch Information gespeichert sein, die bei der Prüfung der Berechtigung einer Person, ein oder mehrere Türen 6, 7 des Paketbriefkastens 2 zu öffnen, genutzt wird. Diese Information kann mit der Berechtigungsinformation, die eine Person beim Nachweisen der Berechtigung einsetzt, übereinstimmen (beispielsweise im Falle von Codes oder symmetrischen Schlüsseln als Berechtigungsinformation), oder kann zu der Berechtigungsinformation korrespondieren (beispielsweise im Falle eines asymmetrischen Schlüsselpaars).

In einer besonders einfachen Ausführungsform kann beispielsweise die erste Berechtigungsinformation als erster Code und die zweite Berechtigungsinformation als zweiter Code ausgebildet sein, wobei die Codes beispielsweise unterschiedlichen RFID- oder NFC-Tags zugeordnet sind, beispielsweise als jeweilige Kennung der RFID- oder NFC-Tags. Der erste und zweite Code sind dann beispielsweise zum einen in dem Speicher 32 gespeichert, und zum anderen ist der erste Code auf einem ersten RFID- oder NFC-Tag und der zweite Code auf einem zweiten RFID- oder NFC-Tag gespeichert. Dies kann beispielsweise durch Einlernen dieser Codes in den Speicher 32 nach Auslieferung des Paketbriefkastens 2 geschehen. Alternativ können einer oder beide der Codes bereits bei der Herstellung des Paketbriefkastens 2 oder bei der Bestückung des Paketbriefkastens 2 mit den elektronischen Komponenten der Fig. 10 in den Speicher 32 gespeichert werden. Es ist auch denkbar, dass die Komponenten der Fig. 10 zumindest teilweise modular ausgebildet sind und bereits bei Lieferung an den Hersteller oder Monteur des Paketbriefkastens 2 mit einem oder mehreren der Codes versehen sind (beispielsweise zumindest mit dem zweiten Code, der dem Besitzer zugeordnet ist). Analog können die Codes auch bereits bei der Herstellung der RFID- oder NFC-Tags in diese eingespeichert werden, oder können erst später in diese eingelernt werden. Der zweite RFID- oder NFC-Tag wird dann dem Besitzer des Paketbriefkastens 2 zur Verfügung gestellt, während der erste RFID- oder NFC-Tag einem Zusteller oder einer Gruppe von Zustellern zur Verfügung gestellt wird.

Alternativ kann anstelle der Kennungen der Tags beispielsweise auf die Kennung des Paketbriefkastens 2 abgestellt werden. Die Tags, die zur Öffnung eines Paketbriefkastens 2 berechtigen sollen, erhalten dann beispielsweise Berechtigungsinformation eingespeichert, die auf einer Verschlüsselung der Kennung des zu öffnenden Paketbriefkastens 2 beruht. Die erste und zweite Berechtigungsinformation kann dann beispielsweise dadurch unterschieden werden, dass zusätzlich zu der Kennung des Paketbriefkastens 2 weitere Information (z.B. ein entsprechend gesetztes Flag mit der Bedeutung "0"=erste Berechtigungsinformation und "1"=zweite Berechtigungsinformation) hinzugefügt und zusammen mit oder getrennt von der Kennung des Paketbriefkastens 2 verschlüsselt wird, um die erste/zweite Berechtigungsinformation zu erhalten. Der Paketbriefkasten 2 (insbesondere dessen Prozessor 30) kann diese erste/zweite Berechtigungsinformation dann entschlüsseln, anhand des Vergleichs der entschlüsselten Paketbriefkastenkennung mit einer im Paketbriefkasten 2 gespeicherten Version (z.B. im Speicher 32) der Paketbriefkastenkennung prüfen, ob die Berechtigung sich grundsätzlich auf den richtigen Paketbriefkasten bezieht und anhand der zusätzlichen entschlüsselten Information (z.B. des Flags) feststellen, ob erste oder zweite Berechtigungsinformation vorliegt. Die Verschlüsselung kann dabei beispielsweise pro Tag einen eigenen Schlüssel verwenden, der beispielsweise von einer Kennung des Tags abhängt. Alternativ kann die Verschlüsselung auch für alle Tags den gleichen Schlüssel verwenden. Im Paketbriefkasten ist dann entweder der eine für alle Tags verwendete Schlüssel (oder ein zu diesem korrespondierender Schlüssel) hinterlegt, oder es sind die jeweiligen Tag-spezifischen Schlüssel (oder die zu diesen korrespondierenden Schlüssel) hinterlegt oder erzeugbar (z.B. durch einen vordefinierten Algorithmus, der die Kennung des jeweiligen Tags berücksichtigt).

Weiterhin alternativ kann Berechtigungsinformation verwendet werden, die ein oder mehrere Berechtigungskenngrößen und das Ergebnis einer kryptographischen Operation über die Berechtigungskenngrößen enthält. Eine der Berechtigungskenngrößen kann beispielsweise eine Kennung des Paketbriefkastens 2 sein, und eine weitere ein Flag oder eine sonstige Information, das/die angibt, welche Tür(en) des Paketbriefkastens 2 bei Vorlage dieser Berechtigungsinformation geöffnet werden dürfen (z.B. mit der Bedeutung "0"=erste Berechtigungsinformation und "1"=zweite Berechtigungsinformation, oder z.B. "0"=Öffnen des Paketfachs und "1": Öffnen des Paketfachs und Brieffachs). Die kryptographische Operation kann als Ergebnis beispielsweise einen MAC erzeugen, beispielsweise einen CMAC oder HMAC, der auf einem Schlüssel beruht, der im Paketbriefkasten 2 hinterlegt ist. Der Paketbriefkasten 2 (insbesondere dessen Prozessor 30), bildet nach Empfang des Berechtigungsinformation mit den darin enthaltenen Berechtigungskenngrößen und dem MAC darüber selbst den MAC aus den empfangenen Berechtigungskenngrößen (unter Verwendung des im Paketbriefkasten 2 hinterlegten Schlüssels) und prüft diesen gegen den empfangenen MAC. Bei Übereinstimmung wird von der Integrität der Berechtigungskenngrößen ausgegangen und geprüft, ob die Gehäusekennung der Berechtigungsinformation zu der Gehäusekennung des Paketbriefkastens 2 passt. Wenn dies der Fall ist, wird anhand des Flags entschieden, welche Tür(en) des Paketbriefkastens geöffnet werden soll(en). Wie bereits oben erläutert können weitere Berechtigungskenngrößen in der Berechtigungsinformation enthalten sein, deren Integrität ebenfalls durch den MAC sichergestellt werden kann, und die dann im Paketbriefkasten 2 gegengeprüft werden, z.B. ein Gültigkeitszeitraum der Berechtigungsinformation,. Es wurde oben ebenfalls erläutert, dass die Berechtigungsinformation für mehrere Paketbriefkästen gleichermaßen gültig sein kann, indem beispielsweise eine Gruppenkennung und der gleiche Schlüssel für diese mehreren Paketbriefkästen verwendet werden. Alternativ können für jeden Paketbriefkasten individuelle Berechtigungsinformationen verwendet werden, aber diese beispielsweise dennoch zu mehreren auf einem Handscanner gespeichert und dann an jedem Paketbriefkasten entsprechend ausgewählt werden, beispielsweise automatisch oder zumindest unterstützt durch den Handscanner durch Reduzierung der zur Auswahl stehenden Benachrichtigungsinformationen. Anstelle des MACs kann die kryptographische Operation auch eine digitale Signatur (z.B. ein verschlüsselter Hashwert) über die Berechtigungskenngrößen erzeugen, beispielsweise mit einem ersten Schlüssel eines asymmetrischen Schlüsselpaars. Die digitale Signatur kann dann im Paketbriefkasten 2 anhand eines dort gespeicherten zweiten Schlüssels des asymmetrischen Schlüsselpaars gegengeprüft werden (z.B. durch Entschlüsselung des verschlüsselten Hashwerts und Vergleich mit einem lokal erzeugten Hashwert über die empfangenen Berechtigungskenngrößen), um die Integrität der Benachrichtigungsinformationen festzustellen.

Der Arbeitsspeicher 31 wird zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor steuert eine Antriebssteuerung 33, die der Steuerung des Antriebs 14 (siehe Fig. 1) dient. Beispielsweise werden Steuersignale des Prozessors in der Antriebssteuerung 33 in Spannungssignale für den Antrieb 14 umgesetzt, um das mit dem Antrieb 14 gekoppelte gemeinsame Antriebselement 13 in eine erste oder zweite Verstellposition oder in die Schließposition zu bewegen. Die von dem gemeinsamen Antriebselement 13 eingenommene Bewegungsstellung kann beispielsweise mit einem oder mehreren der Sensoren 34 (beispielsweise einem Magnetfeldsensor, wie bereits oben ausgeführt wurde) überprüft und beispielsweise in den Steuerungsprozess einbezogen werden.

Weitere der Sensoren 34 dienen beispielsweise zur Erfassung, ob jeweilige der Türen 6, 7 geöffnet oder geschlossen sind. Wie oben erläutert, kann es sich dabei beispielsweise um Öffnungssensoren handeln, die beispielsweise jeweils an dem Auswerfstö-ßel 19 angebracht sind.

Der Prozessor 30 ist ferner operativ mit einer Kommunikationseinheit 35 verbunden, mit der beispielsweise ein drahtloser Informationsaustausch (z.B. über Funk, oder optisch) mit externen Vorrichtungen möglich ist, beispielsweise um Berechtigungsinformation oder Information, die unter Verwendung von Berechtigungsinformation erzeugt wurde, von den externen Vorrichtungen zu empfangen und damit dem Prozessor 30 zur Prüfung verfügbar zu machen. Die Kommunikationseinheit 35 kann beispielsweise als RFID- und/oder NFC-Leseeinheit ausgebildet und in der Lage sein, Berechtigungsinformation oder Information, die unter Verwendung von Berechtigungsinformation erzeugt wurde, mittels RFID- und/oder NFC-Übertragungstechnik von einem insbesondere tragbaren Datenträger (beispielsweise einem RFID- und/oder NFC-Tag) oder einem tragbaren elektronischen Gerät, das RFID- und/oder NFC-Übertragungstechnik unterstützt, und beispielsweise als Handscanner oder Mobiltelefon ausgebildet ist, zu empfangen. Anstelle oder zusätzlich zu RFID- und/oder NFC-Übertragungstechnik können auch WLAN (Wireless Local Area Network)-, Bluetooth-Übertragungstechnik oder Übertragungstechnik nach einem zellularen Mobilkommunikationssystem, wie beispielsweise nach dem GSM (Global System for Mobile Communications)-, UMTS (Universal Mobile Telecommunications Standard)- oder LTE (Long Term Evolution)-Standard, zum Einsatz kommen. Zusätzlich oder alternativ ist auch der Einsatz optischer Übertragungstechnik denkbar, beispielsweise über Infrarot-Kommunikation.

Zusätzlich oder alternativ zu der Kommunikationseinheit 35 ist eine Eingabeeinheit 36 vorgesehen, die operativ mit dem Prozessor 30 gekoppelt ist, und von Personen genutzt werden kann, um Berechtigungsinformation oder unter Verwendung von Berechtigungsinformation erzeugte Information in die Eingabeeinheit 36 einzugeben und damit dem Prozessor zur Prüfung der Berechtigung verfügbar zu machen. Die Eingabeeinheit 36 kann beispielsweise eine Tastatur, ein Touchpad, akustische Erfassungsmittel und/oder optische Erfassungsmittel, insbesondere einen Scanner, umfassen.

Schließlich ist optional eine Ausgabeeinheit 37 vorgesehen, mittels derer beispielsweise Betriebszustände des Paketbriefkastens 2, wie beispielsweise ein Batterieladezustand, oder ein Füllzustand von ein oder mehreren Fächern 4, 5 des Paketbriefkastens 2, oder ein Logbuch über die erfolgten Entriegelungen und optional der dabei verwendeten Berechtigungsinformationen ausgegeben werden kann. Die Ausgabeeinheit kann eine elektronische Ausleseschnittstelle und/oder eine optische und/oder akustische Signalisiervorrichtung umfassen. Beispielsweise kann ein Batterieladezustand und/oder ein Füllzustand optisch mittels Leuchtmitteln angezeigt werden.

Die Komponenten 30-37 können beispielsweise zusammen als Modul ausgebildet sein, oder können zumindest teilweise als Einzelmodule ausgebildet sein, um eine leichte Austauschbarkeit bei etwaigen Defekten zu gewährleisten.

Fig. 11 ist ein Flussdiagramm 110 eines beispielhaften Verfahrens zur Steuerung der Entriegelung von ein oder mehreren Türen 6, 7 eines erfindungsgemäßen Paketbriefkastens 2, wie er beispielsweise in der Fig. 1 dargestellt ist. Dieses Verfahren kann beispielsweise von dem Prozessor 30 und der Antriebssteuerung 33 (siehe Fig. 10) ausgeführt werden.

Ausgangspunkt des Verfahrens 110 ist ein Zustand, in dem alle Türen 6, 7 des Paketbriefkastens 2 geschlossen und verriegelt sind.

In einem ersten Schritt 111 wird geprüft, ob erste Berechtigungsinformation erhalten wurde. Dies kann durch Empfang von Information über die Kommunikationseinheit 35 oder Eingabe von Information in die Eingabeeinheit 36 erfolgen. Im Prozessor 30 wird dann geprüft, ob die erhaltene Information die erste Berechtigungsinformation darstellt, beispielsweise durch Vergleich mit im Programmspeicher 32 gespeicherter erster Berechtigungsinformation oder durch Bearbeitung (z.B. Entschlüsselung) der ersten Berechtigungsinformation und Vergleich des erhaltenen Resultats mit im Programmspeicher 32 gespeicherter Information oder durch Auswertung eines empfangenen Ergebnisses einer kryptographisch Informationen über die Berechtigungskenngrößen (z.B. eines MAC oder einer digitalen Signatur) zur Prüfung der Integrität der Berechtigungskenngrößen, und - im Falle der Übereinstimmung - Auswertung der somit als integer angesehenen Berechtigungskenngrößen durch Vergleich mit gespeicherten, erzeugten oder empfangenen Informationen, wie oben bereits beschrieben wurde.

Wenn der Prozessor 30 entscheidet, dass erste Berechtigungsinformation erhalten wurde (was bedeutet, dass die Person, die sich mit der ersten Berechtigungsinformation authentisiert, zur Öffnung der Tür 6 berechtigt ist), wird in Schritt 112 mittels der Antriebssteuerung 33 der Antrieb 14 so angesteuert, dass das gemeinsame Antriebselement 13 die erste Verstellposition einnimmt, also die Tür 6 entriegelt wird. Anderenfalls springt das Verfahren zu Schritt 116.

Nach der Ansteuerung des Antriebs 14 wird dann im Schritt 113 mittels eines Öffnungssensors wie oben beschrieben geprüft, ob die Tür 6 geöffnet wurde. Die Öffnung kann durch den Auswerfstößel 19 oder durch manuelles Öffnen der Tür 6 durch eine Person erfolgt sein. Wenn erkannt wird, dass die Tür offen ist, wird in Schritt 114 der Antrieb 14 mittels der Antriebssteuerung 33 so angesteuert, dass das gemeinsame Antriebselement 13 die Schließposition einnimmt. Anderenfalls verharrt das Verfahren 110 in der Prüfschleife 113, ob die Tür 6 geöffnet ist, bis die Tür 6 tatsächlich geöffnet ist.

Nach der Ansteuerung des gemeinsamen Antriebselements zur Einnahme der Schließposition wird dann in Schritt 115 wiederum in einer Prüfschleife geprüft, ob die Tür 6 geschlossen wurde. Ist dies der Fall, schreitet das Verfahren 110 zu Schritt 116 weiter, anderenfalls verharrt es in der Schleife 115, bis die Tür geschlossen wurde. Wie oben bereits erläutert wird die Tür 6 beim Schließen aufgrund des Schnappverschlusses dann auch automatisch verriegelt.

Im Schritt 116 wird geprüft, ob zweite Berechtigungsinformation erhalten wurde. Dies verläuft analog zur Prüfung auf den Erhalt der ersten Berechtigungsinformation im Schritt 111. Wenn festgestellt wird, dass zweite Berechtigungsinformation erhalten wurde (was bedeutet, dass die Person, die sich mit der zweiten Berechtigungsinformation authentisiert, zur Öffnung der Türen 6 und 7 berechtigt ist), wird mittels der Antriebssteuerung 33 der Antrieb 14 so angesteuert, dass das gemeinsame Antriebselement 13 die zweite Verstellposition einnimmt, also beide Türen 6, 7 entriegelt werden. Anderenfalls springt das Verfahren zurück zu Schritt 111.

Im Schritt 118 wird wiederum geprüft, ob beide Türen 6, 7 geöffnet sind, beispielsweise anhand von Öffnungssensoren.

Wenn beide Türen 6, 7 geschlossen sind, wird im Schritt 119 mittels der Antriebssteuerung 33 der Antrieb 14 so angesteuert, dass das gemeinsame Antriebselement 13 die Schließposition einnimmt.

Im Schritt 120 wird dann für beide Türen 6, 7 geprüft, ob diese geschlossen sind, und nur im Falle von geschlossenen Türen 6, 7 springt das Verfahren 110 zurück zum Schritt 111.

Im Verfahren 110 ist es unerheblich, ob zunächst geprüft wird (Schritt 111), ob erste Berechtigungsinformation erhalten wurde, und dann geprüft wird (Schritt 116), ob zweite Berechtigungsinformation erhalten wurde, diese Reihenfolge kann (jeweils mit den nachfolgenden Schritten) genauso gut auch vertauscht sein. Anstelle der Prüfung, ob erste/zweite Benachrichtigungsinformation erhalten wurde, kann ebenso gut geprüft werden, ob Information, die unter Verwendung von erster/zweiter Benachrichtigungsinformation erzeugt wurde, erhalten wurde. Die Schritte 113 und/oder 118 sind optional. Beispielsweise kann jeweils darauf vertraut werden, dass eine Öffnung durch den jeweiligen Auswerfstößel 19 zuverlässig erfolgt oder dass ein Nutzer unmittelbar nach der Entriegelung die Türen 6 und/oder 7 manuell öffnet, und dann anstelle der Durchführung der Schritte 113 und/oder 118 nach einer vordefinierten Zeitverzögerung, beispielsweise nach 3, 5,10 oder 20 s, um nur ein paar Beispiele zu nennen, automatisch wieder die Ansteuerung des Antriebs 14 vorgenommen wird, um das gemeinsame Antriebselement 13 in die Schließposition zu bewegen (Schritte 114 und 119). Auch die Schritte 115 und/oder 120 können grundsätzlich entfallen, wenn davon ausgegangen wird, dass die Nutzer des Paketbriefkastens 2 die Türen 6, 7 nach Beendigung des Einstell- oder Herausnahmevorgangs von ein oder mehreren Sendungen in oder aus dem Paketbriefkasten immer zuverlässig und zeitnah verschließen. Alternativ kann in den Schritten 115 und/oder 120 jeweils ein weiterer Schritt vorgesehen werden, der ein Signal (beispielsweise einen Warnton oder eine digitalisierte gesprochene oder synthetisch erzeugte Anweisung) an den Nutzer ausgibt, wenn nach eine vordefinierten Zeit nach der Entriegelung oder nach der Einnahme der Schließposition, beispielsweise 10, 20 oder 30 s, um nur ein paar Beispiele zu nennen, die Tür 6 (Schritt 115) bzw. die Türen 6 und 7 (Schritt 120) nicht geschlossen wurden.

Im Verfahren 110 kann weiterhin optional vorgesehen sein, dass die Tür 6 des Paketbriefkastens nicht zweimal unmittelbar aufeinanderfolgend unter Verwendung der ersten Berechtigungsinformation entriegelt werden kann. Dies dient beispielsweise der Vermeidung, dass ein Zusteller (der die erste Berechtigungsinformation verwendet) versucht, mehr als eine Sendung in das Paketfach 4 des Paketbriefkastens 2 einzustellen (beispielsweise an mehreren Tagen), ohne dass zwischenzeitlich eine Entleerung durch den Besitzer des Paketkastens (der die zweite Berechtigungsinformation verwendet) stattgefunden hat, und/oder der Vermeidung, dass ein zweiter Zusteller, der die erste Berechtigungsinformation verwendet, das Paketfach 4 entriegeln kann, in das bereits ein erster Zusteller, der ebenfalls die erste Berechtigungsinformation verwendet, eine Sendung eingestellt hat, bevor diese durch den Besitzer des Paketbriefkastens 2 (der die zweite Berechtigungsinformation verwendet) geleert wurde. Dies kann beispielsweise durch Pflege eines Logbuchs, in dem zumindest für einen begrenzten Zeitraum oder eine begrenzte Zahl von Entriegelungen gespeichert wird, unter Verwendung welcher Berechtigungsinformation die Tür 6 entriegelt wurde, und einer Abfrage im Schritt 111, ob es sich bei Erhalt der ersten Berechtigungsinformation um die zweite unmittelbar aufeinanderfolgende Entriegelung unter Verwendung der ersten Berechtigungsinformation handeln würde, erzielt werden. Wenn mehrere Zusteller jeweils unterschiedliche erste Berechtigungsinformation verwenden, um die Tür 6 zu entriegeln, kann entsprechend auch geprüft und verhindert werden, dass unmittelbar aufeinanderfolgende Entriegelungen mit unterschiedlichen ersten Berechtigungsinformationen stattfinden. Es müsste dann also nach jeder Entriegelung mit erster Berechtigungsinformation erst eine Entriegelung mit zweiter Berechtigungsinformation stattfinden.

Im Gegensatz dazu können allerdings beispielsweise mehrere unmittelbar aufeinanderfolgende Entriegelungen unter Verwendung der zweiten Berechtigungsinformation möglich sein (beispielsweise damit der Besitzer des Paketkastens morgens ein zugestelltes Paket aus dem Paketfach nehmen und nachmittags ein abzuholendes Paket in das Paketfach einstellen kann).

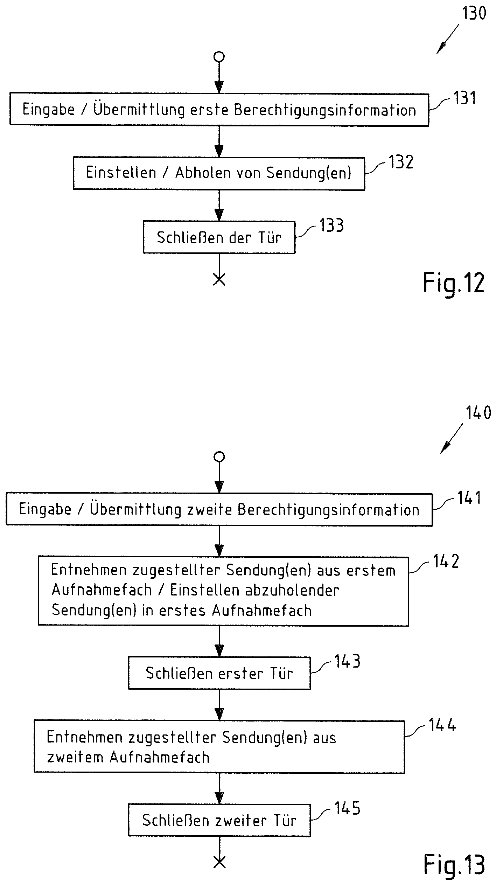

Fig. 12 ist ein Flussdiagramm 130 einer beispielhaften Ausführungsform des erfindungsgemäßen Verfahrens zur Entriegelung von ein oder mehreren Türen 6 des erfindungsgemäßen Paketbriefkastens 2, wie er in der Fig. 1 dargestellt ist. Dabei verwendet beispielsweise ein Zusteller erste Berechtigungsinformation, um sich gegenüber dem Paketbriefkasten 2 als berechtigt zur Entriegelung der Tür 6 auszuweisen.

In einem ersten Schritt 131 wird die erste Berechtigungsinformation vom Zusteller in die Eingabemittel 36 (siehe Fig.10) des Paketbriefkastens 2 eingegeben (z.B. über eine Tastatur oder andere Mittel wie oben bereits beschrieben) oder an die Kommunikationseinheit 35 des Paketbriefkastens 2 übermittelt, beispielsweise unter Verwendung einer Vorrichtung, auf der die erste Berechtigungsinformation gespeichert ist, durch den Zusteller. Der Zusteller kann also beispielsweise einen RFID- oder NFC-Tag (oder auch ein elektronisches Gerät wie einen Handscanner) mit darauf gespeicherter erster Berechtigungsinformation vor eine als RFID- oder NFC-Lesegerät ausgebildete Kommunikationseinheit 35 halten, was dazu führt, dass die erste Berechtigungsinformation oder Information, die unter Verwendung der ersten Berechtigungsinformation erzeugt wurde, an die Kommunikationseinheit 35 übermittelt wird.

Die am Paketbriefkasten 2 erhaltene erste Berechtigungsinformation oder die damit erzeugte Information wird dann vom Prozessor 30 (siehe Fig. 10) geprüft und führt zur Entriegelung der Tür 6 des Paketfachs 4 (siehe Fig. 1).

Im Schritt 132 stellt der Zusteller dann ein oder mehrere Sendungen in das Paketfach 4 ein, und schließt die Tür im Schritt 133. Das Schließen der Tür 6 führt dann automatisch zur Verriegelung der Tür 6 aufgrund der Ausbildung des Verriegelungselementmoduls 9 als Schnappverschluss.

Fig. 13 ist ein Flussdiagramm140 einer weiteren beispielhaften Ausführungsform des erfindungsgemäßen Verfahrens zur Entriegelung von ein oder mehreren Türen 6, 7 des erfindungsgemäßen Paketbriefkastens 2, durchgeführt durch einen Besitzer des Paketbriefkastens 2. Der Besitzer verwendet dazu die zweite Berechtigungsinformation, die ihn zur Entriegelung beider Türen 6, 7 berechtigt.

In einem ersten Schritt 141 wird die zweite Berechtigungsinformation vom Besitzer in die Eingabemittel 36 (siehe Fig. 10) des Paketbriefkastens 2 eingegeben (z.B. über eine Tastatur oder andere Mittel wie oben bereits beschrieben) oder an die Kommunikationseinheit 35 des Paketbriefkastens 2 übermittelt, beispielsweise unter Verwendung einer Vorrichtung, auf der die erste Berechtigungsinformation gespeichert ist, durch den Besitzer. Der Besitzer kann also beispielsweise einen RFID- oder NFC-Tag (oder auch ein elektronisches Gerät wie ein Mobiltelefon) mit darauf gespeicherter zweiter Berechtigungsinformation vor eine als RFID- oder NFC-Lesegerät ausgebildete Kommunikationseinheit 35 halten, was dazu führt, dass die zweite Berechtigungsinformation oder Information, die unter Verwendung der zweiten Berechtigungsinformation erzeugt wurde, an die Kommunikationseinheit 35 übermittelt wird.

Die am Paketbriefkasten 2 erhaltene zweite Berechtigungsinformation oder die damit erzeugte Information wird dann vom Prozessor 30 (siehe Fig. 10) geprüft und führt zur Entriegelung der Türen 6 des Paketfachs 4 und 7 des Brieffachs 5 (siehe Fig.1).

Im Schritt 142 entnimmt der Besitzer dann ein oder mehrere zugestellte Sendungen aus dem Paketfach 4 oder stellt ein oder mehrere abzuholende Sendungen in das Paketfach 4 ein, und schließt die Tür 6 im Schritt 143. Das Schließen der Tür 6 führt dann automatisch zur Verriegelung der Tür 6 aufgrund der Ausbildung des Verriegelungselementmoduls 9 als Schnappverschluss.

Da auch die Tür 7 des Brieffachs 5 entriegelt wurde, kann der Besitzer zusätzlich, und im Unterschied zum Zusteller (vgl. das Verfahren 130 der Fig. 12), auch ein oder mehrere zugestellte Sendungen, z.B. Briefe, aus dem Brieffach 5 entnehmen, und dann im Schritt 145 die Tür 7 schließen, was wiederum zur Verriegelung der Tür 7 führt, da deren Verriegelungselementmodul 10 ebenfalls als Schnappverschluss ausgebildet ist.

Die Verfahren 130 und 140 der Fig. 12 und 13 können selbstverständlich an demselben Paketbriefkasten 2 ausgeführt werden, wie auch das Verfahren 110 der Fig.11 verdeutlicht.

Das erfindungsgemäße Gehäuse wurde in dieser Spezifikation als ein Gehäuse beschrieben, das eine erfindungsgemäße Verriegelungseinheit, die u.a. durch ein gemeinsames Antriebselement gekennzeichnet ist, umfasst. In gleicher Weise wurde das erfindungsgemäße Verfahren als Verfahren beschrieben, dass zur Entriegelung eines erfindungsgemäßen Gehäuses mit einer solchen erfindungsgemäßen Verriegelungseinheit dient. Anstelle der erfindungsgemäßen Verriegelungseinheit können allerdings auch beispielsweise den jeweiligen Türen des Gehäuses zugeordnete gesonderte Verriegelungseinheiten eingesetzt werden, die kein gemeinsames Antriebselement aufweisen, und beispielsweise separat angesteuert werden können, um die jeweilige Tür zu entriegeln (die Verriegelung kann beispielsweise wiederum durch einen Schnappverschloss erfolgen), was allerdings konstruktiv aufwändiger ist und insbesondere mehrere Antriebe, beispielsweise einen pro Verriegelungseinheit, erfordern kann.

Vorliegend soll nichtsdestotrotz auch ein dergestalt abgewandeltes Gehäuse und ein Verfahren zur Entriegelung von ein oder mehreren Türen dieses abgewandelten Gehäuses als offenbart angesehen werden, bei dem anstelle der Ansteuerung des Antriebs dergestalt, dass eine erste Verstellposition des gemeinsamen Antriebselements eingenommen wird, jeweilige Verriegelungseinheiten zur Entriegelung der ihnen jeweils zugeordneten Tür oder ersten Gruppe von Türen von mindestens zwei Türen des Gehäuses angesteuert werden und anstelle der Ansteuerung des Antriebs dergestalt, dass eine zweite Verstellposition des gemeinsamen Antriebselements eingenommen wird, jeweilige Verriegelungseinheiten zur Entriegelung der ihnen jeweils zugeordneten allen Türen der mindestens zwei Türen des Gehäuses angesteuert werden. Entsprechend wird dann beispielsweise anstelle der Ansteuerung des Antriebs dergestalt, dass durch das gemeinsame Antriebselement die Schließposition eingenommen wird, eine Ansteuerung der jeweiligen Verriegelungseinheit zur Einnahme der Schließposition durchgeführt. Eine solche Verriegelungseinheit kann beispielsweise wie ein Verriegelungselementmodul (9 oder 10 in Fig. 1) ausgebildet und beispielsweise mit einem jeweiligen Antrieb verbunden sein, aber nicht mit den Antrieben anderer Verriegelungseinheiten. Es ist dem Fachmann aber unmittelbar klar, dass die Verriegelungseinheit auch andersartig ausgebildet sein kann, beispielsweise in Form eines elektromotorisch oder magnetisch verschiebbaren Riegels, beispielsweise mit Federbelastung zur Realisierung einer Fallenfunktion, um nur ein Beispiel zu nennen.

In Fig. 10 wäre dann beispielsweise lediglich die Antriebssteuerung 33 durch eine Antriebssteuerung zu ersetzten, die die Antriebe der jeweiligen Verriegelungseinheiten (beispielsweise einer ersten, der Tür 6 zugeordneten Verriegelungseinheit und einer zweiten, der Tür 7 zugeordneten Verriegelungseinheit) jeweils separat ansteuern kann, und bei einem auf erster Berechtigungsinformation beruhendem Berechtigungsnachweis nur die der Pakettür 6 zugeordnete erste Verriegelungseinheit zur Entriegelung ansteuert, aber bei einem auf zweiter Berechtigungsinformation beruhendem Berechtigungsnachweis die der Pakettür 6 und der Brieftür 7 zugeordneten ersten und zweiten Verriegelungseinheiten zur Entriegelung ansteuert. Der Prozessor 30 und die weiteren Komponenten, insbesondere die Kommunikationseinheit 35, die Eingabeeinheit 36 und die Ausgabeeinheit 37 würden dann beispielsweise gemeinsam genutzt und beispielsweise nur die Verriegelungseinheiten mehrfach vorgesehen.

Entsprechend wäre der Schritt 112 in Fig. 11 dergestalt abzuwandeln, dass lediglich die erste Verriegelungseinheit zur Entriegelung der Tür 6 angesteuert wird, der Schritt 114 wäre dergestalt abzuwandeln, dass lediglich die erste Verriegelungseinheit in die Schließposition (in der der Schnappverschluss ausgelöst werden kann) gebracht wird, der Schritt 117 wäre dergestalt abzuwandeln, dass lediglich die erste und zweite Verriegelungseinheit zur Entriegelung der Türen 6 und 7angesteuert wird, und der Schritt 119 wäre dergestalt abzuwandeln, dass die erste und zweite Verriegelungseinheit in die Schließposition (in der der Schnappverschluss ausgelöst werden kann) gebracht werden.

Ein solches abgewandeltes Gehäuse wäre ohne weiteres durch das in den Fig. 12 und 13 beschriebene Verfahren von Personen bedienbar. Auch die Ausführungen in dieser Spezifikation zu der ersten und zweiten Berechtigungsinformation, insbesondere der Art und Weise, wie diese an das Gehäuse übertragen oder in dieses eingegeben werden kann, wie Gültigkeitsbeschränkungen auferlegt werden können, wie erste Berechtigungsinformation für mehrere Gehäuse gelten kann, wie erste Berechtigungsinformation nur für ein Gehäuse gelten kann, aber mit weiterer erster Berechtigungsinformation zur Entriegelung weiterer Gehäuse auf derselben tragbaren elektronischen Vorrichtung gespeichert sein kann, und/oder wie die Entriegelung von Türen (insbesondere der Pakettür 6) bei mehrmaliger unmittelbar aufeinanderfolgender Verwendung der ersten Berechtigungsinformation verhindert werden kann, gelten dann ohne Weiteres auch für dieses abgewandelte Gehäuse und sollen so offenbart verstanden werden.

Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Formulierung "und/oder" soll in dieser Spezifikation so verstanden werden, dass im Falle von"A und/oder B" die Konstellationen "A", "B" und "A und B" darunter fallen. Formulierungen wie "umfassen" oder "mit" sollen offen verstanden werden, so dass also das Vorhandensein von weiteren Merkmalen möglich, aber nicht zwingend ist.

### Bezugszeichenliste:

- 1: Verriegelungseinheit
- 2: Paketbriefkasten
- 3: Gehäuse
- 4: erste Gehäuseöffnung
- 5: zweite Gehäuseöffnung
- 6: erste Tür
- 7: zweite Tür
- 8: Schlitz für den Einwurf von Briefen
- 9: Verriegelungselementmodul für die erste Tür
- 10: Verriegelungselementmodul für die zweite Tür
- 11: Verriegelungskörper, Schließhaken
- 12: Verriegelungsantrieb
- 13: gemeinsames Antriebselement, drehbare Achse in Form einer Stange
- 14: elektromotorischer Antrieb
- 15: Kopplung zwischen Antrieb und gemeinsamen Antriebselement
- 16: erstes Stangenteil
- 17: zweites Stangenteil
- 18: Führungshalterungen
- 19: Auswerfstößel
- 20: Montagehülse
- 21: Rückstellfeder
- 22: Verriegelungslementmodulkörper
- 23: Kopplung, Koppelstücke
- 24: Lagerhülse
- 25: Ausnehmung
- 26: radial vorstehender Bolzen
- 27: erster Spielbereich
- 28: zweiter Spielbereich
- 29: Montageträger
- 30: Prozessor
- 31: Arbeitsspeicher
- 32: Programmspeicher
- 33: Antriebessteuerung
- 34: Sensor(en)
- 35: Kommunikationseinheit
- 36: Eingabeeinheit
- 37: Ausgabeeinheit
- 110, 130, 140: Flussdiagramme
- 111-120,131-133,141-145: Flussdiagrammschritte

## Patentansprüche

1. Gehäuse (3), insbesondere Aufnahmebehälter von Gegenständen, mit mindestens zwei Türen (6, 7) zum Verriegeln von jeweiligen Gehäuseöffnungen (4,5), insbesondere zu Aufnahmefächern, umfassend:
- eine Verriegelungseinheit (1), die für jede der Türen (6, 7) jeweils ein Verriegelungselementmodul (9,10) mit mindestens einem Verriegelungskörper (11) und einem Verriegelungsantrieb (12) zum Betätigen des Verriegelungskörpers (11) aufweist, wobei der Verriegelungsantrieb (12) für die Verriegelungselementmodule (9, 10) ein gemeinsames Antriebselement (13) aufweist, welches um einen Verstellweg bewegbar ist sowie in einer ersten Verstellposition den/die Verriegelungskörper (11) für lediglich eine der Türen (6) oder lediglich eine erste Gruppe (6) von zwei Gruppen von Türen der Türen (6, 7) in eine Entriegelungsstellung bringt und in einer zweiten Verstellposition die Verriegelungskörper (11) für alle der Türen (6, 7) in eine Entriegelungsstellung bringt, oder
- Verriegelungseinheiten, wobei eine oder mehrere jeweilige Verriegelungseinheiten der Verriegelungseinheiten zur Entriegelung der ihnen jeweils zugeordneten Tür (6) oder ersten Gruppe (6) von zwei Gruppen von Türen der mindestens zwei Türen (6, 7) des Gehäuses (3) ansteuerbar sind und jeweilige Verriegelungseinheiten der Verriegelungseinheiten zur Entriegelung der ihnen jeweils zugeordneten allen Türen (6, 7) der mindestens zwei Türen (6, 7) des Gehäuses (3) ansteuerbar sind,
wobei das Gehäuse ferner umfasst:
- Berechtigungsprüfmittel zur Prüfung der jeweiligen Berechtigung von Personen, ein oder mehrere der Türen des Gehäuses zu entriegeln, anhand von beim Nachweis der Berechtigung durch die Personen jeweils eingesetzter Berechtigungsinformation, wobei die Berechtigungsinformation Berechtigungskenngrößen enthält, wobei eine der Berechtigungskenngrößen Information ist, welche Tür(en) oder Gruppe(n) von Türen des Gehäuses mit der Berechtigungsinformation geöffnet werden dürfen, und wobei die Berechtigungsinformation das Ergebnis einer kryptographischen Operation mit einem Schlüssel über die Berechtigungskenngrößen als Prüfinformation enthält,
und entweder
- Steuerungsmittel zum Ansteuern eines dem gemeinsamen Antriebselement (13) zugeordneten Antriebs in Abhängigkeit des Ergebnisses der Prüfung der Berechtigungsprüfmittel, so dass das gemeinsame Antriebselement die erste Verstellposition einnimmt, wenn bei dem Berechtigungsnachweis erste Berechtigungsinformation eingesetzt wurde, und die zweite Verstellposition einnimmt, wenn bei dem Berechtigungsnachweis zweite Berechtigungsinformation eingesetzt wurde, oder
- eine Steuerung zum Ansteuern
- der ein oder mehreren jeweiligen Verriegelungseinheiten zur Entriegelung der ihnen jeweils zugeordneten Tür (6) oder ersten Gruppe (6) von zwei Gruppen von Türen der mindestens zwei Türen (6, 7) des Gehäuses (3), wenn bei dem Berechtigungsnachweis erste Berechtigungsinformation eingesetzt wurde, und
- der jeweiligen Verriegelungseinheiten zur Entriegelung der ihnen jeweils zugeordneten allen Türen (6, 7) der mindestens zwei Türen (6, 7) des Gehäuses (3), wenn bei dem Berechtigungsnachweis zweite Berechtigungsinformation eingesetzt wurde,
so dass bei Einsatz der ersten Berechtigungsinformation lediglich die Tür oder die erste Gruppe von Türen der mindestens zwei Türen entriegelt wird und bei Einsatz der zweiten Berechtigungsinformation alle Türen der mindestens zwei Türen entriegelt werden.

2. Gehäuse (3) nach Anspruch 1,
wobei die erste Berechtigungsinformation von einem Zusteller oder einer Gruppe von Zustellern einsetzbar ist und diesen/diese berechtigt, lediglich die eine der Türen (6) oder lediglich die erste Gruppe von Türen (6) der Türen (6, 7) zu entriegeln, um ihm/ihnen das Einstellen von ein oder mehreren Sendungen in die jeweilige(n) Gehäuseöffnung(en) (4) und/oder das Abholen von ein oder mehreren Sendungen, insbesondere Paketen, aus der/den jeweiligen Gehäuseöffnung(en) (4) zu ermöglichen, und
wobei die zweite Berechtigungsinformation mindestens eine dem Gehäuse (3) zugeordnete Person, insbesondere einen Besitzer des Gehäuses (3), berechtigt, alle der Türen (6, 7) zu entriegeln, um ihm das Entnehmen von ein oder mehreren zugestellten Sendungen, insbesondere Paketen, aus der/den Gehäuseöffnungen (4), die der Tür (6) oder der erste Gruppe von Türen (6) zugeordnet ist/sind, oder das Einstellen von ein oder mehreren abzuholenden Sendungen, insbesondere Paketen, in die Gehäuseöffnung (4), die der Tür (6) oder der ersten Gruppe von Türen (6) zugeordnet ist/sind, sowie das Entnehmen von ein oder mehreren zugestellten Sendungen, insbesondere Briefen, aus der/den Gehäuseöffnungen (5), die der/den restlichen Türen (7) der Türen (6,7) zugeordnet ist/sind, zu ermöglichen.

3. Gehäuse (3) nach einem der Ansprüche 1-2,
wobei die Berechtigungsprüfmittel eingerichtet sind zu verhindern, dass die Tür (6) oder die erste Gruppe von Türen (6) der Türen des Gehäuses (3) zweimal unmittelbar aufeinanderfolgend unter jeweiliger Verwendung der ersten Berechtigungsinformation entriegelt wird/werden.

4. Gehäuse nach einem der vorhergehenden Ansprüche, wobei die Prüfinformation ein Nachrichtenauthentifizierungscode ist, der am Gehäuse über die Berechtigungskenngrößen erneut berechnet und mit dem empfangenen Nachrichtenauthentifizierungscode verglichen wird unter Verwendung des am Gehäuse bekannten Schlüssels oder eines am Gehäuse bekannten korrespondierenden Schlüssels.

5. Gehäuse nach einem der vorhergehenden Ansprüche, wobei die Berechtigungsinformation von einer Verwaltungseinheit, insbesondere einem Server, erzeugt wurde, und wobei der Schlüssel nur der Verwaltungseinheit und dem Gehäuse bekannt ist.

6. Gehäuse nach einem der vorhergehenden Ansprüche, wobei eine Berechtigungskenngröße der Berechtigungskenngrößen eine Kennung des Gehäuses oder dessen Schlosses oder eine Kennung für eine Gruppe von Gehäusen oder deren Schlössern ist.

7. Gehäuse nach einem der vorhergehenden Ansprüche, wobei eine Berechtigungskenngröße der Berechtigungskenngrößen eine Information betreffend einen Gültigkeitszeitraum der Berechtigungsinformation ist.

8. Verfahren zum Entriegeln einer oder mehrerer Türen (6, 7) eines Gehäuses (3) nach einem der Ansprüche 1-7, das Verfahren umfassend
- Nachweisen, gegenüber den Berechtigungsprüfmitteln des Gehäuses, der Berechtigung einer Person, ein oder mehrere Türen(6, 7) des Gehäuses (3) zu entriegeln, durch Einsatz der ersten oder zweiten Berechtigungsinformation.

9. Verfahren nach Anspruch 8, wobei das Nachweisen der Berechtigung folgendes umfasst:
- Eingeben der ersten oder zweiten Berechtigungsinformation oder von Information, die unter Verwendung der ersten oder zweiten Berechtigungsinformation erzeugt wurde, in eine Eingabeeinheit des Gehäuses (3), oder
- Übermitteln, insbesondere drahtloses Übermitteln, der ersten oder zweiten Berechtigungsinformation oder von Information, die unter Verwendung der ersten oder zweiten Berechtigungsinformation erzeugt wurde, an eine Empfangseinheit des Gehäuses (3).

10. Verfahren nach einem der Ansprüche 8-9, wobei die erste Berechtigungsinformation zur Entriegelung von jeweils ein oder mehreren Türen (6) von mehreren Gehäusen (3) berechtigt.

11. Verfahren nach Anspruch 10, wobei die erste Berechtigungsinformation auf einer tragbaren elektronischen Vorrichtung gespeichert ist, insbesondere auf einem RFID- oder NFC-Tag oder auf einem Handscanner.

12. Verfahren nach einem der Ansprüche 8-9, wobei die erste Berechtigungsinformation zur Entriegelung von jeweils ein oder mehreren Türen (6) nur eines Gehäuses (3) berechtigt, und wobei die erste Berechtigungsinformation zusammen mit weiterer erster Berechtigungsinformation, die zur Entriegelung von jeweils ein oder mehreren Türen (6) von ein oder mehreren weiteren Gehäusen (3) berechtigt, auf einer tragbaren elektronischen Vorrichtung gespeichert ist, insbesondere auf einem RFID- oder NFC-Tag oder auf einem Handscanner.

13. Verfahren nach einem der Ansprüche 8-12, wobei die erste Berechtigungsinformation eine zeitlich beschränkte Gültigkeit aufweist und/oder nach einer vordefinierten Anzahl von Verwendungen zum Nachweis der Berechtigung ungültig wird.

14. Verfahren nach einem der Ansprüche 8-13, wobei zum Nachweis der Berechtigung die erste Berechtigungsinformation eingesetzt wird, und wobei das Verfahren ein Verfahren zum Entriegeln von ein oder mehreren Türen (6, 7) des Gehäuses (3) und zur Verwendung des Gehäuses (3) ist, das Verfahren ferner umfassend:
- Einstellen von ein oder mehreren Sendungen in die der einen entriegelten Tür (6) oder der der ersten Gruppe von entriegelten Türen jeweils zugeordneten Gehäuseöffnung(en) (4) und/oder Abholen von ein oder mehreren Sendungen, insbesondere Paketen, aus der/den der einen entriegelten Tür (6) oder der der ersten Gruppe von entriegelten Türen jeweils zugeordneten Gehäuseöffnung(en), und
- Schließen der entriegelten Tür (6) oder der ersten Gruppe von entriegelten Türen.

15. Verfahren nach einem der Ansprüche 8-13, wobei zum Nachweis der Berechtigung die zweite Berechtigungsinformation eingesetzt wird, undwobei das Verfahren ein Verfahren zum Entriegeln von ein oder mehreren Türen (6, 7) des Ge-Gehäuses (3) und zur Verwendung des Gehäuses (3) ist, das Verfahren ferner umfassend:
- Entnehmen von ein oder mehreren zugestellten Sendungen, insbesondere Paketen, aus der/den Gehäuseöffnungen (4), die der entriegelten Tür (6) oder der erste Gruppe von entriegelten Türen (6) zugeordnet ist/sind, oder Einstellen von ein oder mehreren abzuholenden Sendungen, insbesondere Paketen, in die Gehäuseöffnung (4), die der entriegelten Tür (6) oder der ersten Gruppe von entriegelten Türen (6) zugeordnet ist/sind,
- Entnehmen von ein oder mehreren zugestellten Sendungen, insbesondere Briefen, aus der/den Gehäuseöffnungen (5), die der/den restlichen entriegelten Türen (7) zugeordnet ist/sind, und
- Schließen der entriegelten Türen.

## Claims

1. A housing (3), in particular a receptacle for objects, having at least two doors (6, 7) for locking respective housing openings (4, 5), in particular leading to storage compartments, comprising:
- a locking unit (1) which respectively has for each of the doors (6, 7) a locking element module (9, 10) with at least one locking body (11) and a locking drive (12) for actuating the locking body (11), wherein the locking drive (12) for the locking element modules (9, 10) has a common drive element (13) which is movable by an adjustment distance, and in a first adjustment position moves the locking body or bodies (11) for merely one of the doors (6) or merely a first group (6) of two groups of doors of the doors (6, 7) into an unlocking position, and in a second adjustment position moves the locking bodies (11) for all of the doors (6, 7) into an unlocking position, or
- locking units, wherein one or more respective locking units of the locking units are controllable to unlock the door (6) or first group (6) of two groups of doors of the at least two doors (6, 7) of the housing (3) which is/are respectively assigned to said locking units, and respective locking units of the locking units are controllable to unlock all of the doors (6, 7) of the at least two doors (6, 7) of the housing (3) which are respectively assigned to said locking units,
wherein the housing further comprises:
- authorization checking means for checking the respective authorization of persons to unlock one or more of the doors of the housing, on the basis of authorization information which is respectively used by the persons when providing proof of authorization, wherein the authorization information comprises authorization characteristic variables, wherein one of the authorization characteristic variables is information as to which door(s) or group(s) of doors of the housing can be opened with this authorization information, and wherein the authorization information comprises the result of a cryptographic operation with a key to the authorization characteristic variables as a checking information,
and either
- a control means for controlling a drive assigned to the common drive element (13) depending on the result of the check of the authorization checking means, with the result that the common drive element assumes the first adjustment position if first authorization information was used when providing proof of authorization, and assumes the second adjustment position if second authorization information was used when providing proof of authorization, or
- a controller for controlling
- the one or more respective locking units to unlock the door (6) or first group (6) of two groups of doors of the at least two doors (6, 7) of the housing (3) which is/are respectively assigned to said locking units if first authorization information was used when providing proof of authorization, and
- the respective locking units to unlock all of the doors (6, 7) of the at least two doors (6, 7) of the housing (3) which are respectively assigned to said locking units if second authorization information was used when providing proof of authorization,
so that in case of using the first authorization information, only the door or the first group of doors of the at least two doors is unlocked and in case of using the second authorization information, all doors of the at least two doors are unlocked.

2. The housing (3) as claimed in claim 1,
wherein the first authorization information is usable by a delivery agent or a group of delivery agents and authorizes said agent/agents to unlock merely the one of the doors (6) or merely the first group of doors (6) of the doors (6, 7) in order to permit said agent/agents to place one or more shipments in the respective housing opening or openings (4) and/or to collect one or more shipments, in particular parcels, from the respective housing opening or openings (4), and
wherein the second authorization information authorizes at least one person assigned to the housing (3), in particular an owner of the housing (3), to unlock all of the doors (6, 7), in order to permit said person to remove one or more delivered shipments, in particular parcels, from the housing opening or openings (4) which is/are assigned to the door (6) or to the first group of doors (6), or to place one or more shipments which are to be collected, in particular parcels, in the housing opening (4) which is/are assigned to the door (6) or to the first group of doors (6), and to remove one or more delivered shipments, in particular letters, from the housing opening or openings (5) which is/are assigned to the remaining door or doors (7) of the doors (6, 7).

3. The housing as claimed any one of claims 1-2, wherein the authorization checking means is configured to prevent the door (6) or the first group of doors (6) of the doors of the housing (3) from being unlocked twice in direct succession with respective use of the first authorization information.

4. The housing as claimed in any one of the preceding claims, wherein the checking information is a message authentication code, which is computed at the housing over the authorization characteristic variables anew and is compared with the received message authentication code using the key known at the housing or using a corresponding key known at the housing.

5. The housing as claimed in any one of the preceding claims, wherein the authorization information has been generated by an administration unit, in particular a server, and wherein the key is known to only the administration unit and the housing.

6. The housing as claimed in any one of the preceding claims, wherein one authorization characteristic variable of the authorization characteristic variables is an identifier of the housing or of the lock or is an identifier for a group of housings or for their locks.

7. The housing as claimed in any one of the preceding claims, wherein one authorization characteristic variable of the authorization characteristic variables is information relating to the validity period of the authorization information.

8. A method for unlocking one or more doors (6, 7) of a housing (3) as claimed in any one of claims 1-7, the method comprising:
- proving, vis-à-vis the authorization checking means of the housing, the authorization of a person to unlock one or more doors (6, 7) of the housing (3) by using the first or second authorization information.

9. The method as claimed in claim 8, wherein proving the authorization comprises the following:
- inputting the first or second authorization information, or information which was generated using the first or second authorization information, into an input unit of the housing (3), or
- transmitting, in particular in a wireless fashion, the first or second authorization information, or information which was generated using the first or second authorization information, to a reception unit of the housing (3).

10. The method as claimed in any one of claims 8-9, wherein the first authorization information provides authorization to respectively unlock one or more doors (6) of a plurality of housings (3).

11. The method as claimed in claim 10, wherein the first authorization information is stored on a portable electronic device, in particular on an RFID or NFC tag or on a hand-held scanner.

12. The method as claimed in any one of claims 8-9, wherein the first authorization information provides authorization for respectively unlocking one or more doors (6) of only one housing (3), and wherein the first authorization information is stored, together with further first authorization information which provides authorization for respectively unlocking one or more doors (6) of one or more further housings (3), on a portable electronic device, in particular on an RFID or NFC tag or on a hand-held scanner.

13. The method as claimed in any one of claims 8-12, wherein the first authorization information has a temporally limited validity and/or becomes invalid after a predefined number of uses for proving the authorization.

14. The method as claimed in any one of claims 8-13, wherein the first authorization information is used to prove the authorization, and wherein the method is a method for unlocking one or more doors (6, 7) of the housing (3) and for using the housing (3), the method also comprising:
- placing one or more shipments in the housing opening or openings which is/are respectively assigned to the one unlocked door (6) or to the first group of unlocked doors, and/or collecting one or more shipments, in particular parcels, from the housing opening or openings (4) which is/are respectively assigned to the one unlocked door (6) or to the first group of unlocked doors, and
- closing the unlocked door (6) or the first group of unlocked doors.

15. The method as claimed in any one of claims 8-13, wherein the second authorization information is used to prove the authorization, and wherein the method is a method for unlocking one or more doors (6, 7) of the housing (3) and for using the housing (3), the method also comprising:
- removing one or more delivered shipments, in particular parcels, from the housing opening or openings (4) which is/are assigned to the unlocked door (6) or the first group of unlocked doors (6), or placing one or more shipments which are to be collected, in particular parcels, in the housing opening (4) which is/are assigned to the unlocked door (6) or the first group of unlocked doors (6),
- removing one or more delivered shipments, in particular letters, from the housing opening or openings (5) which is/are assigned to the remaining unlocked door or doors (7), and
- closing the unlocked doors.

## Revendications

1. Boîtier (3), en particulier récepteur d'objets, avec au moins deux portes (6, 7) pour le verrouillage d'ouvertures de boîtier (4, 5) respectives, en particulier pour des compartiments de réception, comprenant :
- une unité de verrouillage (1) qui présente pour chacune des portes (6, 7) respectivement un module d'élément de verrouillage (9, 10) avec au moins un corps de verrouillage (11) et un entraînement de verrouillage (12) pour l'actionnement du corps de verrouillage (11), dans lequel l'entraînement de verrouillage (12) présente pour les modules d'élément de verrouillage (9, 10) un élément d'entraînement commun (13) qui est mobile d'une course de réglage ainsi que dans une première position de réglage amène le/les corps de verrouillage (11) pour juste une des portes (6) ou juste un premier groupe (6) de deux groupes de portes des portes (6, 7) dans une position de déverrouillage et dans une seconde position de réglage amène les corps de verrouillage (11) pour toutes les portes (6, 7) dans une position de déverrouillage, ou
- des unités de verrouillage, dans lequel une ou plusieurs unités de verrouillage respectives des unités de verrouillage peuvent être commandées pour le déverrouillage de la porte (6) ou du premier groupe (6) qui leur est associé respectivement de deux groupes de portes des au moins deux portes (6, 7) du boîtier (3), et des unités de verrouillage respectives des unités de verrouillage peuvent être commandées pour le déverrouillage de toutes les portes (6, 7) qui leur sont associées respectivement des au moins deux portes (6, 7) du boîtier (3),
dans lequel le boîtier comporte en outre :
- des moyens de vérification d'autorisation pour la vérification de l'autorisation respective de personnes, à déverrouiller une ou plusieurs des portes du boîtier, à l'aide d'informations d'autorisation utilisées respectivement pour prouver l'autorisation par les personnes, dans lequel les informations d'autorisation contiennent des caractéristiques d'autorisation, dans lequel une des caractéristiques d'autorisation est constituée par des informations selon lesquelles la/les porte(s) ou le/les groupe(s) de portes du boîtier peut/peuvent être ouverte(s) avec les informations d'autorisation, et dans lequel les informations d'autorisation contiennent le résultat d'une opération cryptographique avec une clé sur les caractéristiques d'autorisation comme informations de vérification,
et
- des moyens de commande pour la commande d'un entraînement associé à l'élément d'entraînement commun (13) en fonction du résultat de la vérification des moyens de vérification d'autorisation de sorte que l'élément d'entraînement commun occupe la première position de réglage lorsque pour la preuve de l'autorisation, des premières informations d'autorisation ont été utilisées, et occupe la seconde position de réglage lorsque pour la preuve de l'autorisation, des secondes informations d'autorisation ont été utilisées ou
- une commande pour la commande
- - de l'une ou plusieurs unités de verrouillage respectives pour le déverrouillage de la porte (6) ou du premier groupe (6) qui lui est associé respectivement de deux groupes de portes des au moins deux portes (6, 7) du boîtier (3) lorsque pour la preuve de l'autorisation, des premières informations d'autorisation ont été utilisées, et
- - des unités de verrouillage respectives pour le déverrouillage de toutes les portes (6, 7) qui leur sont associées respectivement d'au moins deux portes (6, 7) du boîtier (3) lorsque pour la preuve de l'autorisation, des secondes informations d'autorisation ont été utilisées,
de sorte que lors de l'utilisation des premières informations d'autorisation, juste la porte ou le premier groupe de portes des au moins deux portes est déverrouillé et lors de l'utilisation des secondes informations d'autorisation, toutes les portes des au moins deux portes sont déverrouillées.

2. Boîtier (3) selon la revendication 1,
dans lequel les premières informations d'autorisation peuvent être utilisées par un livreur ou un groupe de livreurs et l'autorisent/les autorisent à déverrouiller juste l'une des portes (6) ou juste le premier groupe de portes (6) des portes (6, 7) afin de lui/leur permettre d'insérer un ou plusieurs envois dans la/les ouverture(s) de boîtier (4) respective(s) et/ou de retirer un ou plusieurs envois, en particulier des paquets, de la/les ouverture(s) de boîtier (4) respective(s), et
dans lequel les secondes informations d'autorisation autorisent au moins une personne associée au boîtier (3), en particulier un possesseur du boîtier (3), à déverrouiller toutes les portes (6, 7) afin de lui permettre le retrait d'un ou plusieurs envois livrés, en particulier des paquets, de la/des ouverture(s) de boîtier (4) qui est/sont associée(s) à la porte (6) ou au premier groupe de portes (6) ou l'insertion d'un ou plusieurs envois à retirer, en particulier des paquets dans l'ouverture de boîtier (4) qui est/sont associées à la porte (6) ou au premier groupe de portes (6), ainsi que le retrait d'un ou plusieurs envois livrés, en particulier des lettres de la/des ouvertures de boîtier (5) qui est/sont associées à la porte/aux portes restantes (7) des portes (6, 7).

3. Boîtier (3) selon l'une des revendications 1 à 2,
dans lequel les moyens de vérification d'autorisation sont aménagés afin d'empêcher que la porte (6) ou le premier groupe de portes (6) des portes du boîtier (3) ne soit déverrouillé(e) deux fois successivement directement en utilisant respectivement des premières informations d'autorisation.

4. Boîtier selon l'une des revendications précédentes, dans lequel les informations de vérification sont un code d'authentification par message qui calcule de nouveau sur le boîtier par le biais des caractéristiques d'autorisation et est comparé avec le code d'authentification par message reçu en utilisant la clé connue sur le boîtier ou une clé correspondante connue sur le boîtier.

5. Boîtier selon l'une des revendications précédentes, dans lequel les informations d'autorisation ont été générées par une unité de gestion, en particulier un serveur, et dans lequel la clé est connue seulement de l'unité de gestion et du boîtier.

6. Boîtier selon l'une des revendications précédentes, dans lequel une caractéristique d'autorisation parmi les caractéristiques d'autorisation est un identifiant du boîtier ou de sa serrure ou un identifiant pour un groupe de boîtiers ou de ses serrures.

7. Boîtier selon l'une des revendications précédentes, dans lequel une caractéristique d'autorisation parmi les caractéristiques d'autorisation est une information concernant une période de validité des informations d'autorisation.

8. Procédé de déverrouillage d'une ou plusieurs portes (6, 7) d'un boîtier (3) selon l'une des revendications 1 à 7, le procédé comprenant l'étape consistant à :
- produire la preuve, par rapport aux moyens de vérification d'autorisation du boîtier, de l'autorisation d'une personne, pour déverrouiller une ou plusieurs porte(s) (6, 7) du boîtier (3) par utilisation des premières ou secondes informations d'autorisation.

9. Procédé selon la revendication 8, dans lequel la preuve de l'autorisation comporte ce qui suit :
- la saisie des premières ou secondes informations d'autorisation ou d'informations qui ont été générées en utilisant les premières ou secondes informations d'autorisation dans une unité de saisie du boîtier (3) ou
- la transmission, en particulier la transmission sans fil des premières ou secondes informations d'autorisation ou d'informations qui ont générées en utilisant les premières ou secondes informations d'autorisation à une unité de réception du boîtier (3).

10. Procédé selon l'une des revendications 8 à 9, dans lequel les premières informations d'autorisation autorisent le déverrouillage de respectivement une ou plusieurs portes (6) de plusieurs boîtiers (3).

11. Procédé selon la revendication 10, dans lequel les premières informations d'autorisation sont enregistrées sur un dispositif électronique portable, en particulier sur une étiquette RFID ou NFC ou sur un scanner à main.

12. Procédé selon l'une des revendications 8 à 9, dans lequel les premières informations d'autorisation autorisent le déverrouillage de respectivement une ou plusieurs portes (6) seulement d'un boîtier (3), et dans lequel les premières informations d'autorisation autorisent conjointement avec d'autres premières informations d'autorisation qui autorisent le déverrouillage de respectivement une ou plusieurs portes (6) d'un ou plusieurs autres boîtiers (3), sont enregistrées sur un dispositif électronique portable, en particulier sur une étiquette RFID ou NFC ou sur un scanner à main.

13. Procédé selon l'une des revendications 8 à 12, dans lequel les premières informations d'autorisation présentent une validité limitée dans le temps et/ou sont non valides après un nombre prédéfini d'utilisations de preuve d'autorisation.

14. Procédé selon l'une des revendications 8 à 13, dans lequel pour la preuve d'autorisation, les premières informations d'autorisation sont utilisées, et dans lequel le procédé est un procédé de déverrouillage d'une ou plusieurs portes (6, 7) du boîtier (3) et d'utilisation du boîtier (3), le procédé comprenant en outre :
- l'insertion d'un ou plusieurs envois dans la/les ouverture(s) de boîtier (4) associées respectivement à l'une porte déverrouillée (6) ou au premier groupe de portes déverrouillées et/ou le retrait d'un ou plusieurs envois en particulier de paquets de la/des ouverture(s) de boîtier associée(s) respectivement à l'une porte déverrouillée (6) ou au premier groupe de portes déverrouillées et
- la fermeture de la porte déverrouillée (6) ou du premier groupe de portes déverrouillées.

15. Procédé selon l'une des revendications 8 à 13, dans lequel pour la preuve d'autorisation, les secondes informations d'autorisation sont utilisées, et dans lequel le procédé est un procédé de déverrouillage d'une ou plusieurs portes (6, 7) du boîtier (3) et d'utilisation du boîtier (3), le procédé comprenant en outre :
- le retrait d'un ou plusieurs envois livrés, en particulier de paquets de la/les ouverture(s) de boîtier (4) qui est/sont associée(s) à la porte déverrouillée (6) ou au premier groupe de portes déverrouillées (6), ou insertion d'un ou plusieurs envois à enlever, en particulier de paquets, dans l'ouverture de boîtier (4) qui est associée/sont associée(s) à la porte déverrouillée (6) ou au premier groupe de portes (6) déverrouillées,
- le retrait d'un ou plusieurs envois livrés, en particulier de lettres, de la/des ouverture(s) de boîtier (5) qui est/sont associée(s) à la/aux portes (7) déverrouillées restantes et
- la fermeture des portes déverrouillées.
